# FASCICULE DE BREVET EUROPEEN

(11) **EP 4 212 006 B1**
(45) Date de publication et mention de la délivrance du brevet: **26.03.2025**
(21) Numéro de dépôt: 22151961.4
(22) Date de dépôt: 18.01.2022
(51) Int. Cl.: A01D 45/00

(54) **OUTILS ET MACHINE AGRICOLE DE RÉCOLTE DE LÉGUMES CULTIVÉS DANS UNE BUTTE DE CULTURE**
LANDWIRTSCHAFTLICHE GERÄTE UND MASCHINEN ZUR ERNTE VON GEMÜSE, DAS AUF EINEM HÜGELBEET ANGEBAUT WIRD
TOOLS AND AGRICULTURAL MACHINE FOR HARVESTING VEGETABLES CULTIVATED IN A CROP MOUND

(43) Date de publication de la demande: 19.07.2023
(73) Titulaire: Sylektis, 91310 Leuville-Sur-Orge (FR)
(72) Inventeur: GARRIGUE, Wilfried, 91310 LEUVILLE-SUR-ORGE (FR); ABRAHAM, Stéphane, 44100 NANTES (FR)
(74) Mandataire: AtlantIP International

(56) Documents cités:
- EP-A1- 3 484 267
- EP-B1- 3 484 267
- CN-A- 110 249 786
- DE-B3- 102016 112 905
- US-A- 4 425 751

## Description

Le contexte technique de la présente invention est celui des machines agricoles. Plus particulièrement, l'invention se rapporte à la détection et à la récolte d'un légume cultivé dans une butte de culture. Elle trouve une application privilégiée, mais non exclusive, à la détection et à la récolte d'asperges cultivées dans des buttes de culture, et c'est dans le cadre de cette application privilégiée qu'elle sera plus particulièrement décrite dans le présent document.

La récolte des asperges a lieu lorsque les turions de celles-ci émergent de la butte de culture de quelques millimètres à quelques centimètres seulement. Cette récolte nécessite donc, d'une part, de détecter de manière précise et performante l'émergence de la tête des asperges du sol et, d'autre part, de disposer d'outils capables d'aller chercher le turion sous terre sans le blesser ou le briser, et tout en maintenant au maximum l'intégrité de la butte de culture. C'est une récolte manuelle effectuée majoritairement par du personnel saisonnier. Dans un contexte de raréfaction de la main d'œuvre disponible, la récolte manuelle devient problématique, d'autant plus quand la période de récolte est courte.

Pour des exploitations de grande taille, on connaît des machines de récolte qui comportent des organes de détection mettant en œuvre des systèmes de détection optique ou par détection d'une différence de potentiel électrique entre la butte de culture et l'asperge détectée. Ces machines sont extrêmement coûteuses et présentent une grande complexité technique, rendant leurs prix excessifs et inadaptés aux exploitations de petite et moyenne taille c'est-à-dire inférieures à 20 Hectares. L'état de l'art comprend notamment le document DE102016112905 B3.

La présente invention a pour but de proposer une solution de récolte de légumes cultivés dans des buttes de culture, qui soit à la fois simple et d'un coût peu élevé pour être abordable pour des exploitations de petite ou de moyenne taille.

Dans ce but, l'invention a pour objet, selon un premier aspect, un système de récolte d'un légume cultivé dans une butte de culture, le système de récolte comprenant :
- une structure rigide,
   a
- un étage de translation verticale solidaire de la structure rigide et configuré pour déplacer verticalement l'outil de récolte par rapport à la structure rigide, l'outil de récolte étant lié à l'étage de translation verticale au niveau d'une extrémité supérieure du bras de l'outil de récolte opposée à son extrémité libre, l'étage de translation verticale comportant un actionneur configuré pour piloter un déplacement vertical de l'outil de récolte,
- un organe de pivotement de l'outil de récolte, l'organe de pivotement étant configuré pour faire pivoter l'outil de récolte relativement à l'étage de translation verticale autour d'un axe de rotation situé au niveau de l'extrémité supérieure du bras de l'outil de récolte.

Le déplacement vertical de l'outil de récolte est à comprendre ici comme conduisant à un enfoncement de la griffe de l'outil de récolte dans le sol, selon une direction parallèle à une direction principale de pousse d'un légume tel que, par exemple, une asperge, dans une butte de culture.

La face avant de la griffe est ici à comprendre comme la face de celle-ci la plus proche, selon une direction longitudinale de l'outil de récolte, du légume à récolter, et il faut également comprendre ici que la lame tranchante de la griffe est configurée pour couper dans le sol, c'est-à-dire dans la profondeur de la butte de culture, le légume à récolter.

Selon une caractéristique du système de récolte selon l'invention, la griffe de l'outil de récolte comporte une pluralité de lames s'étendant toutes parallèlement les unes aux autres et perpendiculairement à la lame tranchante.

En référence à ce qui précède, on définit un trièdre (L, T, V) dans lequel :
- la direction verticale V représente la direction de déplacement de l'étage de translation verticale précédemment défini,
- la direction transversale T représente une direction principale d'extension de la lame tranchante de la griffe de l'outil de récolte,
- et la direction longitudinale L est perpendiculaire à la fois à la direction transversale T et à la direction verticale V précitées.

Comme indiqué précédemment, la direction verticale V représente également, lorsque l'outil de récolte est placé sur une butte de culture, la direction principale de pousse du légume dans ladite butte. En référence à cette direction, l'axe de rotation de l'outil de récolte est placé en partie supérieure du système de récolte selon l'invention, et la griffe de récolte est placée en partie inférieure du système de récolte selon l'invention.

Selon une caractéristique, l'outil de récolte comporte un sabot de nettoyage configuré pour ôter la terre restant sur la griffe de l'outil de récolte, le sabot de nettoyage étant solidaire de la structure rigide et configuré pour réaliser un nettoyage de l'outil de récolte lorsque celui-ci est déplacé par l'étage de translation verticale.

Plus précisément, l'invention prévoit que le sabot de nettoyage est placé, selon la direction verticale V, au-dessus de la griffe de l'outil de récolte.

Selon une caractéristique du système de récolte selon l'invention, l'étage de translation verticale comporte une vis sans fin liée par une liaison glissière à une platine de translation verticale supportant l'outil de récolte, l'actionneur étant configuré pour piloter une rotation de la vis sans fin afin de contrôler un déplacement vertical de la platine de translation verticale le long de ladite vis sans fin.

Avantageusement, l'invention prévoit que l'axe de rotation de l'organe de pivotement est solidaire de la platine de translation.

Selon une autre caractéristique du système de récolte selon l'invention, l'axe de rotation de l'organe de pivotement s'étend selon la direction transversale T, précédemment définie, du système de récolte, perpendiculairement à la direction verticale V et de manière à générer un mouvement de pivotement de l'outil de récolte conduisant à un déplacement de la griffe selon la direction longitudinale L précédemment définie. Il résulte de ce qui précède que l'axe de rotation de l'organe de pivotement est sensiblement parallèle, aux tolérances de fabrication et de montage près, à la lame tranchante de la griffe de l'outil de récolte.

Lorsque l'actionneur de l'étage de translation verticale commande un déplacement vertical de l'outil de récolte, l'invention prévoit que la griffe de ce dernier pénètre dans la butte de culture verticalement, c'est-à-dire sensiblement selon la direction principale de pousse du légume à récolter. Lorsque l'outil de récolte est entraîné à pivoter autour de l'axe de rotation, transversal, de l'organe de pivotement, situé au niveau de l'extrémité supérieure du bras de l'outil de récolte, la griffe de l'outil de récolte est entraînée dans le même mouvement de rotation : la lame tranchante de la griffe de récolte est alors entraînée dans un mouvement de bascule en direction du légume à récolter jusqu'à trancher celui-ci. Il est à noter ici que les dimensions, respectivement, du bras et de la griffe de l'outil de récolte, sont avantageusement définies de telle manière que, dans le pivotement de la griffe de l'outil de récolte, le mouvement de la lame tranchante de cette dernière se produit sensiblement selon la direction longitudinale du système de récolte selon l'invention, c'est-à-dire selon la direction d'extension des lames parallèles de la griffe de l'outil de récolte. Par convention, le sens de déplacement de la lame tranchante de l'outil de récolte dans le mouvement de bascule entraîné par le pivotement de l'outil de récolte en direction du légume à récolter sera désigné dans ce qui suit par le qualificatif "avant".

Selon une autre caractéristique du système de récolte selon l'invention, l'organe de pivotement comporte au moins un organe d'appui situé au niveau de l'extrémité supérieure du bras de l'outil de récolte et configuré pour collaborer avec une gorge de guidage d'inclinaison solidaire de la structure rigide.

Selon une ou plusieurs des caractéristiques suivantes, prises séparément ou en combinaison :
- l'au moins un organe d'appui est situé, en référence aux directions et orientations précédemment définies, en avant de l'axe de rotation de l'organe de pivotement.
- l'au moins un organe d'appui est formé par une roue ou un galet collaborant avec la gorge de guidage d'inclinaison.
- la gorge de guidage d'inclinaison comporte une première partie rectiligne qui s'étend verticalement le long de la structure rigide et une deuxième partie rectiligne située en avant de la première partie, de sorte que lorsque l'organe d'appui est situé dans la première partie de la gorge de guidage d'inclinaison de l'outil de récolte, le bras dudit outil de récolte est incliné, en référence aux directions et orientations précédemment définies, vers l'arrière du système de récolte, et, lorsque l'organe d'appui est situé dans la deuxième partie de la gorge de guidage d'inclinaison de l'outil de récolte, le bras de l'outil de récolte est orienté de manière sensiblement verticale.
- la gorge de guidage d'inclinaison comporte une limite inférieure, de sorte que lorsque l'organe d'appui est en butée contre ladite limite inférieure et que la platine de translation est animée d'un mouvement de translation verticale en direction de la limite inférieure, l'outil de récolte est animé d'un mouvement de pivotement autour de l'axe de rotation de l'organe de pivotement.

Selon une autre caractéristique, le système de récolte selon l'invention comporte un étage de guidage en translation verticale de la platine de translation verticale relativement à la structure rigide.

Selon différentes caractéristiques, prises séparément ou en combinaison :
- l'étage de guidage en translation verticale comporte au moins un élément de guidage qui s'étend parallèlement à la vis sans fin et collaborant avec au moins un patin monté sur la platine de translation.
- chaque au moins un élément de guidage prend la forme d'un cylindre.
- la platine de translation présente la forme générale d'un U, chaque extrémité libre du U étant en prise avec un élément de guidage de l'étage de guidage en translation verticale.

Selon une autre caractéristique, le système de récolte selon l'invention comporte un outil de préhension solidaire de la platine de translation verticale, l'outil de préhension étant configuré pour saisir et relâcher un légume récolté par l'outil de récolte.

Selon différentes caractéristiques prises séparément ou en combinaison :
- l'outil de préhension prend la forme d'une pince pilotée afin de contrôler son ouverture et sa fermeture.
- la pince comporte deux peignes situés en regard l'un de l'autre et formant une mâchoire destinée à saisir ou relâcher le légume récolté.
- l'ouverture et la fermeture de la mâchoire formant la pince sont commandées par un électro-aimant.
- l'outil de préhension comporte un chariot de translation longitudinale, la pince étant supportée par ledit chariot de translation longitudinale de sorte à pouvoir être déplacée longitudinalement par rapport à l'outil de récolte.

Selon une autre caractéristique, le système de récolte selon l'invention comporte un étage de translation transversale, l'étage de translation transversale étant configuré pour déplacer la structure rigide selon une direction perpendiculaire à la direction verticale. Plus précisément, l'étage de translation transversale est configuré pour déplacer la structure rigide et l'outil de récolte qu'elle supporte selon la direction transversale précédemment définie.

Selon différentes caractéristiques, prises séparément ou en combinaison :
- l'étage de translation transversale comporte au moins une vis sans fin liée au travers d'une liaison glissière à la structure rigide du système de récolte, et un actionneur configuré pour piloter une rotation de l'au moins une vis sans fin afin de contrôler un déplacement transversal de la structure rigide le long de la vis sans fin.
- l'étage de translation transversale comporte un capteur configuré pour déterminer une position transversale de la structure rigide le long de la vis sans fin.
- le capteur comporte au moins un codeur configuré pour mesurer une rotation de l'au moins une vis sans fin et/ou au moins un capteur inductif configuré pour mesurer une distance transversale entre ledit capteur inductif et la structure rigide.

Le système de récolte selon l'invention comporte donc, en référence à ce qui précède, une première vis sans fin destinée à assurer la translation verticale de l'étage de translation verticale de l'outil de récolte, et une deuxième vis sans fin configurée pour permettre un déplacement transversal de la structure rigide et, donc, de l'outil de récolte. Il est à noter que, en référence aux directions et orientations précédemment définies, la direction transversale est, lorsque le système de récolte selon l'invention est placé sur une butte de culture, avantageusement une direction transversale de cette butte de culture, ou, en d'autres termes, la direction d'une largeur de cette butte de culture. **Il** résulte de ce qui précède que le système de récolte selon l'invention permet, d'une part, un déplacement vertical de l'outil de récolte dans une butte de culture, c'est-à-dire un déplacement de cet outil de récolte dans la profondeur de ladite butte de culture pour récolter, grâce à la lame tranchante de l'outil de récolte, des légumes poussant dans la profondeur de cette butte de culture, et, d'autre part, un déplacement transversal de l'outil de récolte selon une largeur de ladite butte de culture. Le système de récolte selon l'invention permet donc, lorsqu'il est placé sur une butte de culture, d'accéder à l'ensemble des légumes situés sur une largeur de cette dernière.

Selon un deuxième aspect, l'invention a pour objet une machine agricole destinée à permettre la récolte de légumes cultivés dans des buttes de cultures d'un champ, la machine agricole comportant :
- un châssis,
- au moins deux roues solidaires d'un arbre mobile en rotation par rapport au châssis, les roues étant destinées à être situées de part et d'autre de la butte de culture lorsque la machine agricole est mise en œuvre dans le champ,
- un système de récolte tel que précédemment décrit, le système de récolte étant solidaire du châssis.

La direction séparant les deux roues situées de part et d'autre de la butte de culture est définie dans ce qui suit comme direction transversale de la machine agricole selon l'invention. Avantageusement, l'invention prévoit que le système de récolte tel que précédemment défini est placé sur le châssis de la machine agricole de telle manière que la direction transversale de cette dernière et la direction transversale, telle que précédemment définie, de l'outil de récolte et du système de récolte, sont confondues, aux tolérances de fabrication et de montage près.

Selon une caractéristique de la machine agricole selon l'invention, les au moins deux roues sont motrices, et la machine agricole comporte un moteur configuré pour générer un couple moteur à l'arbre des aux moins deux roues motrices, le moteur étant solidaire du châssis.

Selon une caractéristique de la machine agricole selon l'invention, les au moins deux roues motrices sont directionnelles.

Selon un exemple avantageux de réalisation, la machine agricole selon l'invention comporte quatre roues motrices. Selon un exemple, ces quatre roues motrices sont également directionnelles.

Selon une autre caractéristique, la machine agricole selon l'invention comporte
- un capteur de proximité situé entre chaque roue directionnelle et la butte de culture,
- une unité de commande configurée pour piloter les roues motrices de manière à ce qu'une distance transversale entre chaque roue directionnelle et la butte de culture soit constante et/ou invariant et/ou égale de chaque côté de la butte de culture.

Selon une caractéristique, la machine agricole selon l'invention comporte un système de réglage vertical du châssis relativement aux roues motrices, l'unité de commande étant configurée pour piloter le système de réglage vertical du châssis de telle manière qu'une distance verticale entre le châssis et la butte de culture soit constante et/ou invariant.

Avantageusement, l'invention prévoit que le système de récolte tel que précédemment défini est placé sur le châssis de la machine agricole de telle manière que la direction de réglage vertical du châssis relativement aux roues motrices et la direction verticale, telle que précédemment définie, de l'outil de récolte et du système de récolte, sont confondues, aux tolérances de fabrication et de montage près.

Selon différentes caractéristiques, prises séparément ou en combinaison :
- le système de réglage vertical comporte un réglage d'inclinaison du châssis relativement à un axe transversal de la machine agricole et/ou relativement à un axe longitudinal de ladite machine agricole.
- le système de réglage vertical comporte un vérin situé au niveau d'au moins un pilier du châssis, le pilier formant une liaison entre ledit châssis et un arbre des roues motrices.

Selon une autre caractéristique, la machine agricole comprend un premier ensemble de caisses de conservation situées le long d'un premier côté transversal de ladite machine agricole et un deuxième ensemble de caisses de conservation situées le long d'un deuxième côté transversal de ladite machine agricole, chaque ensemble de caisses de conservation étant distribué par un tapis de convoyage. La machine agricole selon l'invention comprend donc un premier tapis de convoyage configuré pour distribuer le premier ensemble de caisses de conservation, et un deuxième tapis de convoyage configuré pour distribuer le deuxième ensemble de caisses de conservation, chaque tapis de convoyage étant situé le long d'un côté transversal de la machine agricole selon l'invention.

Selon un troisième aspect de l'invention, l'invention a trait aussi à un outil de détection d'au moins un légume cultivé dans une butte de culture, l'outil de détection comprenant :
- un support qui s'étend selon une direction principale d'élongation, et,
- une pluralité de dispositifs de détection de couple répartis le long de la direction principale d'élongation du support, chaque dispositif de détection de couple comportant, d'une part, une plaque pivotante s'étendant perpendiculairement à la direction principale d'élongation du support et étant mobile en rotation autour d'un axe de pivot et relativement au support, et, d'autre part, un capteur configuré pour détecter un couple apparaissant sur la plaque pivotante.

Plus précisément, la plaque pivotante de chaque dispositif de détection de couple présente une forme générale sensiblement rectangulaire dont les petits côtés sont sensiblement parallèles, aux tolérances de fabrication près, au support de l'outil de détection, et dont les grands côtés sont sensiblement perpendiculaires, aux tolérances de fabrication près, au dit support. Plus précisément encore, l'invention prévoit que l'axe pivot autour duquel la plaque pivotante de chaque dispositif de détection de couple est mobile en rotation est sensiblement parallèle, aux tolérances de fabrication près, aux petits côtés de la plaque pivotante précitée et au support de l'outil de détection. On définit alors une position de repos de la plaque pivotante de chaque dispositif de détection de couple, dans laquelle aucun couple n'est détecté et dans laquelle la plaque pivotante ne se déplace pas en rotation autour de son axe pivot, et une position de détection dans laquelle le capteur de détection de couple est actionné et dans laquelle la plaque pivotante précitée forme, avec sa position de repos, un angle non nul défini par la rotation de ladite plaque pivotante autour de son axe pivot.

En référence aux directions et orientations précédemment définies, l'invention prévoit que le support de l'outil de détection s'étend, dans une machine agricole telle que précitée, selon la direction transversale T du trièdre (L, T, V) précédemment défini. Plus précisément, l'invention prévoit que les plaques pivotantes de l'outil de détection s'étendent, dans leur position de repos, selon un plan sensiblement transversal vertical (T, V) du trièdre précité.

Le fonctionnement de l'outil de détection est le suivant : chaque dispositif de détection de couple est destiné à être déplacé relativement à une butte de culture, de telle manière que, lorsqu'un légume cultivé entre en contact avec la plaque pivotante, celle-ci pivote autour de son axe de pivot, actionnant ainsi le capteur configuré pour détecter un couple apparaissant sur ladite plaque pivotante.

Plus précisément, chaque dispositif de détection de couple est destiné à être déplacé relativement à une butte de culture selon une direction sensiblement perpendiculaire au plan dans lequel s'étend sa plaque pivotante dans sa position de repos. En référence à ce qui précède, la direction de déplacement de l'outil de détection est donc sensiblement parallèle à la direction longitudinale L, précédemment définie, du trièdre (L, T, V), c'est-à-dire également à une longueur d'une butte de culture le long de laquelle la machine agricole selon l'invention se déplace pour récolter les légumes qui y poussent.

Avantageusement, les dispositifs de détection sont régulièrement répartis le long de la direction principale d'élongation du support.

Avantageusement, chaque dispositif de détection de couple comporte une platine solidaire du support, la platine comportant un cadre périphérique à une ouverture centrale au travers de laquelle s'étend l'axe pivot, la plaque pivotante s'étendant au travers de l'ouverture centrale.

Avantageusement, chaque plaque pivotante comporte une première partie située d'un premier côté par rapport à l'axe pivot et une deuxième partie située d'un deuxième côté par rapport audit axe pivot, la première et la deuxième partie étant configurées pour que le dispositif de détection de couple soit à l'équilibre lorsque l'outil de détection est placé au-dessus de la butte de culture. Le terme "au-dessus" est ici à comprendre selon la direction verticale, précédemment définie, de l'outil de détection.

Selon différents exemples de réalisation, pris séparément ou en combinaison :
- la première et la deuxième partie de la plaque pivotante s'étendent dans un même plan comportant l'axe pivot,
- la première partie de la lame pivotante est réalisée dans un matériau plastique,
- la première partie des plaques pivotantes de tous les dispositifs de détection ont une extrémité libre et ces extrémités libres définissent collectivement une forme complémentaire de celle d'un profil transversal de la butte de culture. Selon différents exemples, cette forme transversale peut être sensiblement trapézoïdale, elliptique, circulaire ou triangulaire.
- la deuxième partie de chaque plaque pivotante est rapportée sur la première partie et fixée solidairement à celle-ci,
- la deuxième partie de chaque plaque pivotante est formée d'un matériau inoxydable, préférentiellement métallique, préférentiellement en acier,
- la deuxième partie de chaque plaque pivotante prend la forme d'une portée dont une extrémité libre collabore avec le capteur de détection de couple précédemment défini,
- l'extrémité libre de la deuxième partie de chaque plaque pivotante porte une cible pour le capteur de détection de couple, ce dernier étant configuré pour mesurer la présence de la cible en face de lui afin de détecter le couple subi par la plaque pivotante. Avantageusement, la cible est du type d'un aimant et le capteur de détection de couple est du type d'un capteur à effet Hall.
- l'outil de détection comporte une unité de commande configurée pour enregistrer dans une zone mémoire le couple détecté par le capteur d'au moins un des dispositifs de détection de couple et/ou un identifiant de l'au moins un des dispositifs de détection de couple et/ou un instant auquel l'au moins un des dispositifs de détection de couple a détecté ledit couple.

Selon un quatrième aspect, l'invention a trait à une machine agricole comportant un outil de détection d'au moins un légume cultivé dans une butte de culture. Les caractéristiques techniques décrites relativement à la machine agricole conforme au deuxième aspect de l'invention s'appliquent mutatis mutandis à la machine agricole conforme au quatrième aspect de l'invention. en d'autres termes, la machine agricole conforme au quatrième aspect de l'invention comporte toutes les caractéristiques techniques, prises seules ou en combinaisons, qui ont été décrites en lien avec la machine agricole conforme au deuxième aspect de l'invention, à l'exception du système de récole.

12ne telle machine agricole comporte ainsi :
- un châssis,
- au moins deux roues motrices solidaires d'un arbre mobile en rotation par rapport au châssis, les roues étant destinées à être situées de part et d'autre de la butte de culture lorsque la machine agricole est mise en œuvre dans le champ,
- un moteur configuré pour générer un couple moteur à l'arbre des au moins deux roues motrices,
- un outil de détection tel que décrit précédemment.

La machine agricole selon l'invention est alors uniquement configurée pour la détection de légumes à récolter, la récolte pouvant être réalisée par divers autres moyens, manuels ou automatisés.

De manière avantageuse, la machine agricole conforme au deuxième aspect de l'invention peut aussi comprendre l'outil de détection, et la machine agricole conforme au quatrième aspect de l'invention peut aussi comprendre le système de récolte. Ainsi, une telle machine agricole comportant à la fois l'outil de détection et le système de récolte tel que décrits précédemment, permet donc, d'une part, par son outil de détection, de détecter la présence de légumes à récolter dans une butte de culture et, d'autre part, par son système de récolte, de récolter lesdits légumes. Pour ce faire, l'outil de détection et le système de récolte sont avantageusement disposés sur la machine agricole de telle manière que l'outil de détection est actionné avant le système de récolte. Plus précisément, l'invention prévoit que la machine agricole peut être déplacée en translation le long d'une butte de culture, la direction longitudinale de cette dernière étant sensiblement confondue avec la direction longitudinale de la machine agricole, de telle manière que, dans ce déplacement, l'outil de détection soit situé en avant, en référence aux directions et orientations précédemment définies, du système de récolte. Selon différents exemples, la translation longitudinale de la machine agricole selon l'invention peut être réalisée par traction de cette dernière, par exemple par un engin agricole motorisé, ou elle peut être réalisée par l'intermédiaire d'un moteur gouvernant les roues motrices et directionnelles de ladite machine agricole.

Selon un cinquième aspect, l'invention a pour objet un procédé de récolte de légumes cultivés dans une butte de culture à l'aide d'une machine agricole telle que précédemment décrite, le procédé de récolte comprenant :
- une étape de positionnement de la machine agricole au-dessus de l'un des légumes cultivés, dit légume à récolter, de sorte que le système de récolte de la machine agricole soit situé à proximité directe du légume à récolter,
- une étape d'enfoncement de l'outil de récolte de la machine agricole dans la butte de culture,
- une étape de tranchage du légume à récolter dans la butte de culture, l'étape de tranchage étant réalisée par l'outil de récolte,
- une étape de récolte du légume à récolter, l'étape de récolte comportant une remontée du légume à récolter par l'outil de récolte,
- une étape de stockage du légume à récolter dans une pluralité de caisses de conservation embarquées sur la machine agricole.

On entend ici par "proximité directe" qu'une distance, mesurée selon la direction longitudinale, précédemment définie, du système de récolte et de la machine agricole selon l'invention, entre le légume à récolter et la lame tranchante de la griffe de l'outil de récolte, est suffisamment faible pour que, dans le mouvement de bascule de la griffe précitée, précédemment décrit, le mouvement de la lame tranchante de cette dernière conduise au tranchage du légume à récolter. Dans la pratique, une distance, mesurée, selon la direction longitudinale précédemment définie, entre l'outil de récolte et le légume à récolter est de l'ordre de quelques centimètres, l'outil de récolte étant placé en arrière du légume à récolter en référence aux directions, sens et orientations précédemment définis.

**Il** faut comprendre ici que l'étape d'enfoncement de l'outil de récolte dans la butte de culture et l'opération de remontée du légume tranché sont réalisées au moyen de l'étage de translation verticale, précédemment décrit, de l'outil de récolte.

Selon une autre caractéristique, le procédé selon l'invention comprend au moins une étape de détection d'au moins un légume cultivé dans la butte de culture, dit légume détecté, chaque au moins une étape de détection étant mise en œuvre par un outil de détection de la machine agricole tel que précédemment défini et conduisant à définir une position longitudinale de la machine agricole relativement à la butte de culture, dite position longitudinale de récolte, de sorte que l'outil de récolte, à l'issue de l'étape de positionnement, soit situé à l'une de l'au moins une position longitudinale de récolte, le légume détecté devenant alors le légume à récolter.

Plus précisément, l'invention prévoit que la détermination de chaque position longitudinale obtenue lors de l'au moins une étape de détection est réalisée à partir de la détection d'une position longitudinale de l'outil de détection, la position longitudinale de récolte étant déterminée par l'ajout, à la position longitudinale de l'outil de détection, d'une valeur correspondant à une distance séparant l'outil de détection de l'outil de récolte sur la machine agricole, prise selon la direction longitudinale.

Selon un premier mode de mise en œuvre du procédé selon l'invention, la machine agricole détecte un légume dans la butte de culture et le récolte au cours d'un même cycle. Selon un autre mode de mise en œuvre du procédé selon l'invention, la machine agricole détecte plusieurs légumes différents et les récolte ultérieurement, en fonction de leurs positions respectives.

Selon une caractéristique, le procédé de récolte selon l'invention comprend une étape d'enregistrement de chaque au moins une position longitudinale définie durant l'étape de détection.

Selon une autre caractéristique du procédé selon l'invention, l'étape de détection de l'au moins un légume détecté comporte une étape de définition d'une position transversale de l'au moins un légume détecté relativement à la butte de culture, dite position transversale de récolte, la position transversale de l'au moins un légume détecté étant définie pour chaque au moins une position longitudinale définie précédemment.

Selon différentes caractéristiques, prises séparément ou en combinaison :
- le procédé de récolte comporte une étape d'enregistrement de chaque au moins une position transversale définie, chaque position transversale de l'au moins un légume détecté étant associée à la position longitudinale dudit au moins un légume détecté correspondant, formant ainsi au moins un couple de positions associées de l'au moins un légume détecté,
- le procédé de récolte comporte une étape de tri des couples de positions de l'au moins un légume détecté en fonction des positions longitudinales, de sorte à organiser les couples de position par ordre croissant ou décroissant de leurs positions longitudinales respectives, les étapes de positionnement, d'enfoncement, de tranchage et de récolte formant un cycle de récolte réalisé ensemble pour chacun des couples de position déterminés,
- le procédé de récolte comporte une étape d'alignement transversal du système de récolte relativement à la butte de culture, de sorte que l'outil de récolte est situé, à l'issue de l'étape d'alignement transversal, dans l'une de l'au moins une position transversale de récolte, le système de récolte étant mobile en translation par rapport à un châssis de la machine agricole et selon une direction sensiblement parallèle à un arbre de deux roues motrices de ladite machine agricole.
- l'étape de tranchage comporte un mouvement de rotation de l'outil de récolte autour d'un axe de rotation situé au niveau d'une extrémité supérieure de l'outil de récolte, l'extrémité supérieure de l'outil de récolte étant située à l'opposé de la lame tranchante, l'extrémité supérieure étant mobile en rotation par rapport à une platine mobile de l'étage de translation verticale de l'outil de récolte, de sorte à trancher le légume à récolter, dit légume tranché.
- le mouvement de rotation est induit par le mouvement de translation verticale de l'outil de récolte généré par l'étage de translation verticale,
- le mouvement de rotation de l'outil de récolte induit un déplacement rotatif de la lame tranchante de l'outil de récolte en direction et au travers du légume à récolter.
- à n'importe quelle étape du procédé de récolte, l'extrémité supérieure de l'outil de récolte et l'axe de rotation dudit outil de récolte sont situés strictement au-dessus de la butte de culture
- l'étape de récolte comporte un déplacement vertical de l'outil de récolte via l'étage de translation vertical de l'outil de récolte, de sorte à extraire le légume tranché hors de la butte de culture, dit légume extrait
- dans l'étape de récolte, durant le déplacement vertical de l'outil de récolte, le légume extrait repose par gravité sur l'outil de récolte.
- l'étape de récolte comporte une étape de saisie du légume extrait par un outil de préhension de l'outil de récolte,
- l'étape de récolte comporte une étape de déplacement de l'outil de préhension de sorte à placer celui-ci et le légume extrait transporté par l'outil de préhension à l'aplomb d'un tapis de convoyage de la machine de récolte,
- l'étape de récolte comporte une étape de libération du légume extrait transporté par l'outil de préhension, afin de placer le légume extrait sur le tapis de convoyage.
- le procédé de récolte comporte une étape de sélection de l'une des caisses de conservation - dite caisse de conservation sélectionnée - vers laquelle le légume extrait présent sur le tapis de convoyage est chargée. Cette étape de sélection comporte une opération de choix alternatif d'une caisse de conservation issue du premier ensemble de caisses de conservation et d'une caisse de conservation issue du deuxième ensemble de caisses de conservation,
- l'alternance est réalisée pour chaque légume extrait ou pour chaque caisse de conservation remplie.
- le procédé de récolte comporte une étape de chargement du légume extrait présent sur le tapis de convoyage - dit légume transporté - dans la caisse de conservation sélectionnée, le tapis de convoyage étant mis en mouvement de manière à transporter le légume transporter en direction de ladite caisse de conservation sélectionnée.
- le procédé de récolte comporte une étape de détection d'une masse de chaque caisse de conservation,
- l'étape de sélection de la caisse de conservation sélectionnée comporte une étape de comparaison de la masse de la caisse de conservation sélectionnée avec une masse de référence, le procédé de récolte comportant une étape de fermeture d'une trappe d'accès à ladite caisse de conservation sélectionnée si la masse de ladite caisse de conservation sélectionnée est supérieure à la masse de référence précitée.

Par la mise en œuvre du procédé tel qu'il vient d'être décrit, l'invention permet une détection et une récolte simples et d'un coût réduit de légumes cultivés dans une butte de culture.

En synthèse, l'invention a trait aux objets suivants :
- le système de récolte conforme au premier aspect de l'invention, ainsi que la machine agricole conforme au deuxième aspect de l'invention et comportant ledit système de récolte ;
- l'outil de détection conforme au troisième aspect de l'invention, ainsi que la machine agricole conforme au quatrième aspect de l'invention et comportant ledit système de récolte ;
- la machine agricole comportant à la fois l'outil de détection et le système de récolte ;
- le procédé de récolte de légumes conforme au cinquième aspect de l'invention.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] est une vue schématique en perspective d'une machine agricole selon un exemple particulier de réalisation de l'invention dans lequel la machine agricole comprend un outil de détection et un outil de récolte tels que précédemment décrits,
[Fig.2] est une vue schématique en perspective générale du système de récolte d'une machine agricole telle que celle illustrée par la FIGURE 1,
[Fig. 3] est une vue schématique en perspective rapprochée de la griffe d'un outil de récolte tel que celui du système de récolte illustré par la FIGURE 2,
[Fig. 4] est une vue schématique en perspective d'un détail d'une griffe telle que celle présentée par la FIGURE 3,
[Fig. 5] illustre en perspective l'outil de préhension d'un système de récolte tel que celui présenté par la FIGURE 2,
[Fig. 6] est une vue schématique en perspective, sous un autre angle de vue, d'un système de récolte tel que celui illustré par la FIGURE 2, la FIGURE 6 montrant plus spécifiquement la partie supérieure du système de récolte en liaison avec le châssis d'une machine agricole telle que celle illustrée par la FIGURE 1,
[Fig. 7a], [Fig. 7b], et [Fig. 7c] sont des vues schématiques de côté illustrant le fonctionnement d'un système de récolte tel que celui illustré par les FIGURES 2 à 6,
[Fig.8] est une vue schématique en perspective rapprochée d'une machine agricole telle que celle illustrée par la FIGURE 1, vue selon un côté de cette dernière, montrant plus précisément un tapis de convoyage et les caisses de conservation associées,
[Fig. 9] est une vue schématique en perspective de l'outil de détection d'une machine agricole telle que celle illustrée par la FIGURE 1,
[Fig. 10] est une vue schématique en perspective rapprochée d'un dispositif de détection de couple d'un outil de détection tel que celui illustré par la FIGURE 5,

Dans ce qui suit, l'invention sera préférentiellement décrite, en référence aux différentes FIGURES, dans le cadre de son application à la récolte d'asperges. Bien entendu, comme indiqué précédemment, l'invention s'applique de la même manière à tout légume présentant un mode de pousse et de récolte similaire à celui des asperges.

Bien entendu également, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

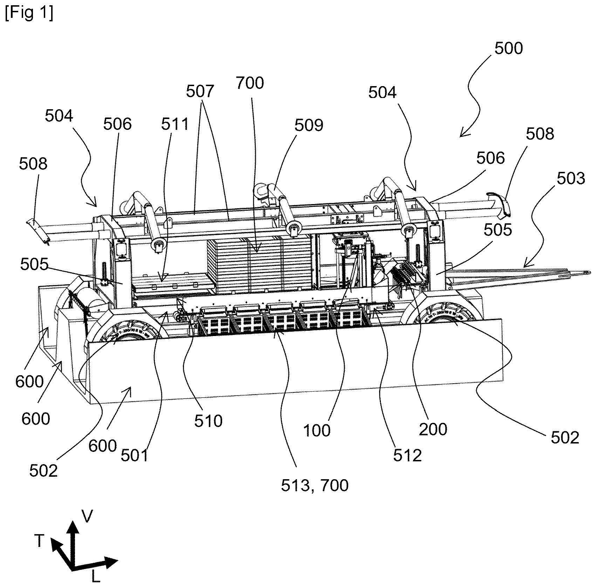

La FIGURE 1 est une vue schématique en perspective d'une machine agricole 500 selon l'invention placée dans une portion d'un champ comprenant plusieurs buttes de culture 600. Plus précisément, la machine agricole 500 telle qu'illustrée par la FIGURE 1 est placée sur une butte de culture 600 située entre deux buttes de culture identiques respectivement situées de part et d'autre de la butte de culture 600 sur laquelle la machine agricole 500 est placée et partiellement représentées sur la FIGURE 1.

En référence à la FIGURE 1, la machine agricole 500 comprend un châssis 501 équipé de quatre roues 502 parallèles entre elles deux à deux : seules deux des roues 502 sont clairement visibles sur la FIGURE 1.

Le châssis 501 de la machine agricole 500 présente la forme générale d'un parallélépipède rectangle dont la plus grande dimension s'étend sensiblement parallèlement à celle des buttes de culture 600.

Dans ce qui suit, on désignera comme direction longitudinale L la direction de la plus grande dimension du parallélépipède rectangle formé par le châssis 501 de la machine agricole 500. Comme le montre la FIGURE 1, la direction longitudinale L est également direction principale d'extension des buttes de culture 600 sur et entre lesquelles la machine agricole 500 est placée : la direction longitudinale L de la machine agricole 500 selon l'invention représente donc également la direction de la longueur des buttes de culture précitées.

En référence à la direction longitudinale L précitée et à la FIGURE 1, les roues 502 de la machine agricole 500 sont sensiblement alignées deux à deux selon la direction longitudinale L et elles sont sensiblement parallèles entre elles deux à deux selon une direction T désignée dans ce qui suit comme direction transversale de la machine agricole 500. La direction transversale T précitée est donc, notamment, la direction d'un arbre de liaison, non visible sur la FIGURE 1, reliant entre elles les deux roues 502 précitées, arbre de liaison autour duquel lesdites roues 502 sont mobiles en rotation. Comme le montre la FIGURE 1, la direction transversale T de la machine agricole 500 est parallèle à une largeur des buttes de culture 600 précédemment évoquées.

En référence à la direction longitudinale L et à la direction transversale T précitées, on définit une direction verticale V de la machine agricole 500, perpendiculaire à la fois à la direction longitudinale L et à la direction transversale T, de telle manière que les directions longitudinale L, transversale T, et verticale V, forment ensemble un trièdre (L, T, V) direct par rapport auquel la machine agricole et ses composants seront décrits dans ce qui suit. Comme le montre la FIGURE 1, lorsque la machine agricole 500 est placée dans un champ formé de buttes de culture 600, la direction verticale V est parallèle à une profondeur des buttes de culture 600 précitées.

En référence à la FIGURE 1, la machine agricole 500 comprend, à l'une des extrémités du châssis 501 selon la direction longitudinale L, plusieurs barres rigides 503 formant ensemble un attelage par lequel la machine agricole 500 peut être rattachée à un engin agricole de traction, non représenté sur la FIGURE 1, afin de réaliser son déplacement, par exemple d'un champ comportant une pluralité de buttes de culture 600 à un autre champ. Dans ce qui suit, on désignera par "avant", l'extrémité longitudinale du châssis 501 à partir de laquelle s'étendent les barres 503 formant l'attelage précité.

Selon le mode de réalisation plus particulièrement illustré par la FIGURE 1, la machine agricole 500 comprend également un premier portique 504, ou portique avant, s'étendant au voisinage de l'extrémité longitudinale avant, précédemment définie, du châssis 501, et un deuxième portique 504, ou portique arrière, s'étendant au voisinage de l'extrémité longitudinale arrière du châssis 501, opposée, selon la direction longitudinale L, à l'extrémité avant, précédemment définie, du châssis 501.

Comme la montre la FIGURE 1, chaque portique 504 comporte deux poteaux 505 sensiblement parallèles entre eux aux tolérances de fabrication près, et s'étendant, à partir du châssis 501, selon la direction verticale V, à l'opposé des roues 502. En référence à la direction verticale V précitée, on désignera dans ce qui suit comme "supérieure" la partie de la machine agricole 500 vers laquelle s'étendent les poteaux 505 des portiques 504, les roues 502 s'étendant en partie inférieure de la machine agricole 500.

En complément aux sens "avant" et "arrière" précités, et en référence à la direction transversale T précédemment définie, la "droite" et la "gauche" de la machine agricole 500 selon l'invention seront définies dans ce qui suit en référence à un observateur placé sur le châssis 501 de la machine agricole 500 et regardant vers l'extrémité longitudinale avant de celle-ci, c'est-à-dire vers les barres 503 précédemment définies.

En référence aux sens et orientations précédemment définis, au sein d'un portique 504, les poteaux 505 sont rattachés au châssis 501 par leur extrémité inférieure, et ils sont reliés entre eux, à leur extrémité supérieure par un pont 506 qui s'étend sensiblement, aux tolérances de fabrication près, selon la direction transversale T de la machine agricole 500.

Comme le montre également la FIGURE 1, la machine agricole 500 comprend deux barres rigides 507 d'extension longitudinale, solidaires des ponts 506 précités. Plus précisément, l'une des barres rigides 507 est située, selon la direction transversale T, au voisinage des poteaux 505 situés à gauche des portiques avant et arrière 504, et l'autre barre rigide 507 est située, selon la direction transversale T, au voisinage des poteaux 505 situés à droite des portiques avant et arrière 504. Comme le montre la FIGURE 1, les barres rigides 507 présentent une dimension longitudinale supérieure à celle du châssis 501, et elles sont reliées entre elles par deux boucliers 508 d'extension principale transversale, dont l'un relie entre elles les extrémités longitudinales "avant" des barres rigides 507 et dont l'autre relie entre elles les extrémités longitudinales "arrière" des barres rigides 507. Il résulte de ce qui précède que, en référence aux directions et orientations précédemment définies, le bouclier 508 "avant" est situé en avant du châssis 501, et le bouclier "arrière" 508 est situé en arrière dudit châssis 501.

Selon l'exemple plus particulièrement illustré par la FIGURE 1, les barres rigides 507 forment, entre les poteaux 505 et selon la direction longitudinale L de la machine agricole 500, des poutres de structure du châssis 501, et elles se prolongent longitudinalement à l'avant et à l'arrière du châssis 501 sous la forme de barres sensiblement cylindriques aux extrémités avant et arrière desquelles sont placés les boucliers 508.

Selon l'exemple plus particulièrement illustré par la FIGURE 1, les boucliers 508 présentent chacun une forme courbe dont le centre de courbure est dirigé vers la partie inférieure de la machine agricole 500, en référence aux directions et orientations précédemment définies.

Selon l'exemple plus particulièrement illustré par la FIGURE 1, les barres rigides 507 supportent une pluralité d'arceaux de guidage 509 d'extension transversale, régulièrement répartis selon la dimension longitudinale des barres rigides 507, entre les ponts 506 précédemment décrits. Selon cet exemple, les arceaux de guidage 509 présentent chacun une forme sensiblement trapézoïdale et ils sont chacun formés d'une pluralité d'éléments tubulaires raccordés entre eux.

Selon l'invention, les boucliers 508 et les arceaux de guidage 509 sont configurés pour permettre à la machine agricole 500 de se déplacer longitudinalement le long de la butte de culture 600 sans dégrader un éventuel élément de protection d'une telle butte tel qu'un tunnel formé d'une bâche textile ou plastique placée au-dessus de ladite butte. A cette fin, et comme le montre la FIGURE 1, en référence à un déplacement longitudinal vers l'avant de la machine agricole 500, le bouclier avant 508 permet l'engagement de la machine agricole 500 sous le tunnel considéré sans risque de déchirure de celui-ci, le matériau formant ce tunnel étant ensuite progressivement guidé sur les arceaux de guidage 509 puis ramené à sa position d'origine par le bouclier arrière 508. En d'autres termes, les boucliers 508 et les arceaux de guidage 509 permettent de maintenir un tel tunnel éloigné de la machine agricole 500, puis de le remettre en place sans risque de l'endommager.

Afin de garantir, selon la direction verticale V, une distance sensiblement constante entre le châssis 501 de la machine agricole 500 et la butte de culture 600, l'invention prévoit que la machine agricole 500 comprend un système de réglage vertical relatif du châssis 501 par rapport aux roues 502, non visible sur la FIGURE 1. Avantageusement, ce système de réglage vertical comporte un dispositif de réglage d'inclinaison du châssis 501 relativement à la direction transversale T de la machine agricole 500 et/ou relativement à la direction longitudinale L de cette dernière. Selon un exemple de réalisation, le système de réglage vertical comporte un vérin situé au niveau d'au moins un poteau 505 du châssis 501, le pilier 505 formant une liaison entre ledit châssis 501 et un arbre de liaison, précédemment évoqué, des roues 502.

L'invention prévoit de plus que la machine agricole 500 comprend un capteur de proximité, non représenté sur la FIGURE 1, situé entre chaque roue 502 et la butte de culture 600.

Complémentairement, l'invention prévoit que la machine agricole 500 comprend une unité de commande 550, non visible sur la FIGURE 1, configurée pour piloter les roues 502 de manière à ce qu'une distance transversale entre chaque roue 502 et la butte de culture 600 soit constante et/ou invariante et/ou égale de chaque côté de la butte de culture 600.

Selon l'invention, la machine agricole 500 comprend également un plateau 510 notamment configuré pour recevoir et stocker une pluralité de caisses de conservation 700 destinées à accueillir les asperges ou autres légumes récoltés par la machine agricole 500.

Selon l'exemple plus particulièrement illustré par la FIGURE 1, la machine agricole 500 comporte également une ou plusieurs batteries électriques 511 configurées pour alimenter un moteur électrique, non visible sur la FIGURE 1, permettant, par exemple, le déplacement longitudinal de la machine agricole 500 le long de la butte de culture 600. A cette fin, ainsi que pour déplacer la machine agricole d'un champ à un autre, les roues 502 de celle-ci sont avantageusement directrices et deux au moins d'entre elles sont motrices.

La machine agricole 500 comprend également deux tapis de convoyage 512 d'extension principale longitudinale et dont une dimension longitudinale est sensiblement égale à une dimension longitudinale du plateau 510 du châssis 501. Plus précisément, en référence aux directions et orientations précédemment définies, la machine agricole 500 comprend un tapis de convoyage 512 "droit" et un tapis de convoyage 512 "gauche", les tapis de convoyage "droit" et "gauche" 512 étant parallèles entre eux.

Selon l'invention, chaque tapis de convoyage 512 est configuré pour distribuer une pluralité de caisses de conservation 700 placées dans des logements 513 situés à côté, selon la direction transversale T, du tapis de convoyage 512 considéré. Plus précisément, la machine agricole 500 comprend une pluralité de logements 513 situés à droite du tapis de convoyage 512 "droit", ainsi qu'une pluralité de logements 513 situés à gauche du tapis de convoyage 512 "gauche". Autrement dit, les logements 513 sont situés vers l'extérieur de la machine agricole 500 selon la direction transversale T de celle-ci, en référence aux tapis de convoyage 512.

Selon l'invention, la machine agricole 500 comporte également un système de récolte 100 tel que précédemment décrit. De plus, selon l'exemple plus particulièrement illustré par la FIGURE 1, la machine agricole 500 comporte un outil de détection 200 tel que précédemment décrit. Le système de récolte 100 et l'outil de détection 200 sont placés sur le châssis 501 de la machine agricole 500, au voisinage de l'extrémité longitudinale avant de celle-ci et, comme le montre la FIGURE 1, le système de récolte 100 est situé, en référence aux directions et orientations précédemment définies, en arrière de l'outil de détection 200 selon la direction longitudinale L.

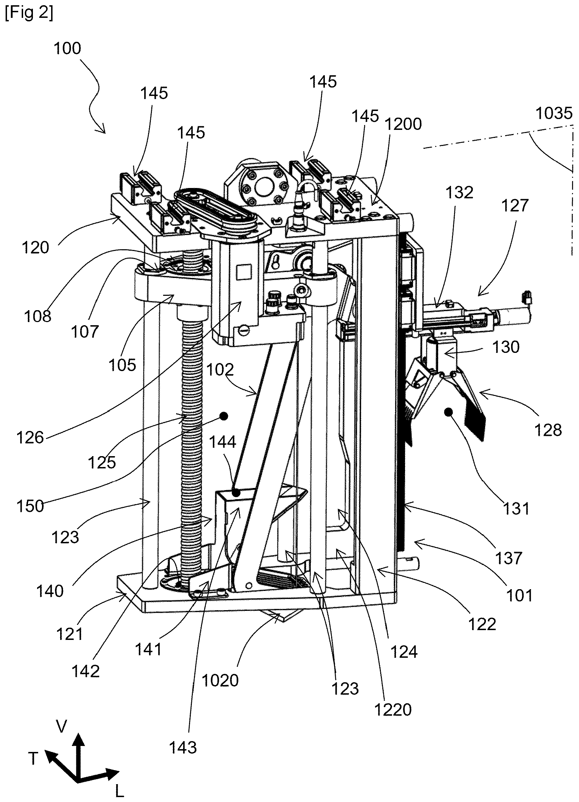

La FIGURE 2 est une vue schématique en perspective du système de récolte 100 selon l'invention. On retrouve sur la FIGURE 2 le trièdre (L, T, V) de la machine agricole 500, précédemment défini. Comme le montre la FIGURE 2 et comme précédemment indiqué, le système de récolte 100 est placé dans la machine agricole 500 de telle manière que les directions longitudinale L, transversale T et verticale V de la machine agricole 500 sont également directions longitudinales L, transversale T et verticale V du système de récolte 100.

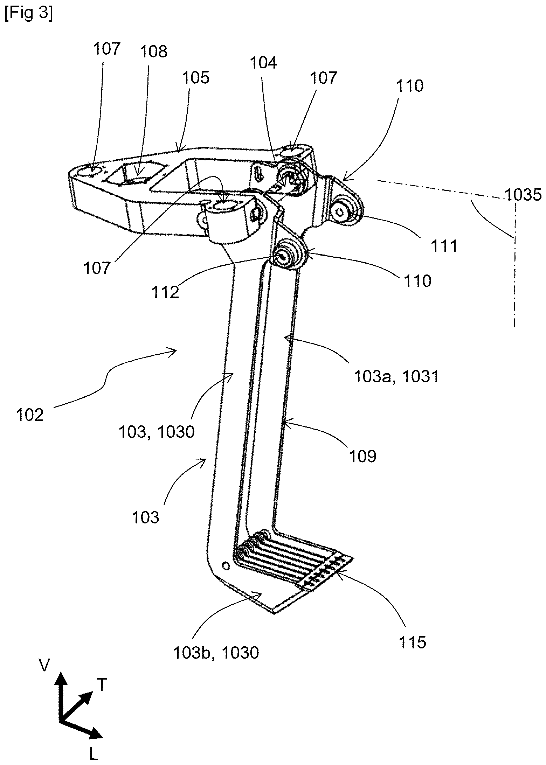

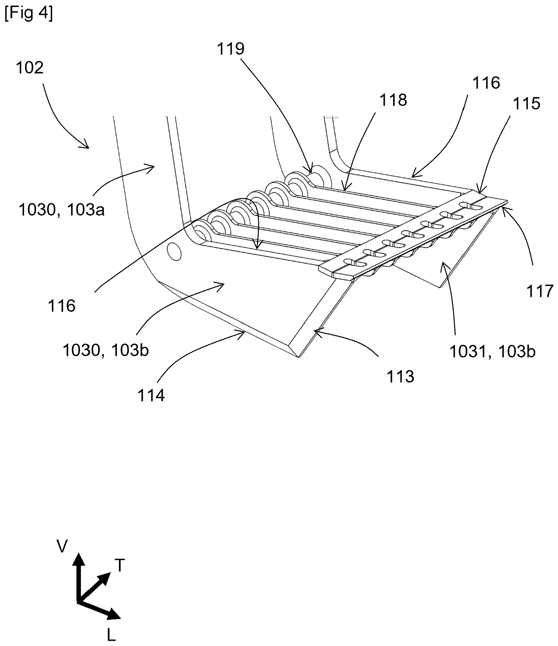

En référence à la FIGURE 2, le système de récolte 100 comprend une structure rigide 101 et un outil de récolte 102. La structure rigide 101 est formée d'un ensemble de plaques et piliers qui délimitent ensemble une forme de cage dans laquelle est reçu l'outil de récolte 102, plus précisément illustrée par les FIGURES 3 et 4. La structure rigide 101 est préférentiellement, mais non exclusivement, réalisée dans un métal tel que de l'acier.

Selon l'exemple plus particulièrement illustré par les FIGURES 3 et 4, l'outil de récolte 102 comporte un bras 103 formé de deux plaques sensiblement planes et parallèles entre elles 1030, 1031, chaque plaque 1030, 1031, s'étendant principalement selon la direction verticale V et selon la direction longitudinale L précédemment définies. Comme le montrent les FIGURES, plaques 1030, 1031, du bras 103 sont reliées entre elles par un axe de pivotement 104 sensiblement cylindrique, qui s'étend principalement selon la direction transversale T, c'est-à-dire sensiblement perpendiculairement, aux tolérances de fabrication et de montage près, aux plaques 1030, 1031, du bras 103.

Plus précisément, chaque plaque 1030, 1031, du bras 103 présente la forme générale d'un L dont les deux branches forment entre elles sensiblement droit. La branche la plus longue 103a du L formant chaque plaque 1030, 1031, du bras 103 s'étend principalement selon la direction verticale V de l'outil de récolte 102, et la branche la plus courte 103b du L précité s'étend principalement selon la direction longitudinale L de l'outil de récolte 102, au-dessous, en référence aux directions et orientations précédemment définies, de la branche sensiblement verticale 103a précitée. Plus précisément encore, l'axe de pivotement 104 relie les deux plaques 1030, 1031, du bras 103, entre elles en les traversant dans leur partie supérieure 103a. les deux plaques 1030, 1031, du bras 103 de l'outil de récolte 102 sont donc montés mobiles en rotation autour de l'axe de pivotement 104 précité.

En référence à la FIGURE 3, l'axe de pivotement 104 est solidaire d'une platine de translation verticale 105 dont la forme est sensiblement celle d'un U qui s'étend principalement dans un plan longitudinal transversal (L, T) de l'outil de récolte 100. Plus précisément, l'outil de récolte 102 est sensiblement centré, aux tolérances de fabrication et de montage près, par rapport à la platine de translation verticale 105 selon la direction transversale T de l'outil de récolte 102, c'est-à-dire qu'un plan longitudinal vertical médian 1035 de l'outil de récolte 102, passant par le milieu, selon la direction transversale T, de l'espace transversal situé entre les plaques 1030, 1031, du bras 103, est également plan longitudinal vertical médian pour la platine de translation verticale 105, passant par le milieu, selon la direction transversale T, de la base du U formant cette dernière. Comme le montre la FIGURE 3, en référence aux directions et orientations précédemment définies, les branches du U formant la platine de translation verticale 105 sont dirigées vers l'avant de l'outil de récolte 102 et du système de récolte 100.

Comme le montre la FIGURE 3, les extrémités des branches du U formant la platine de translation verticale 105 sont configurées pour recevoir les extrémités de l'axe de pivotement 104. Plus précisément, les extrémités longitudinales avant des branches du U formant la platine de translation verticale 105 sont chacune percée, dans leur dimension verticale, d'un orifice 106 sensiblement cylindrique dont l'axe s'étend selon la direction transversale T de l'outil de récolte 102, les orifices 106 étant agencés face à face de sorte à recevoir chacun une extrémité de l'axe de pivotement 104 précité et de telle manière que ledit axe de pivotement 104 soit placé parallèlement à la direction transversale T de l'outil de récolte 102.

Par ailleurs, l'invention prévoit que le U formant la platine de translation verticale 105 est percé de plusieurs orifices traversants 107 sensiblement cylindriques dont l'axe s'étend selon la direction verticale V de l'outil de récolte 102. Selon l'exemple plus particulièrement illustré ici, la platine de translation verticale 105 est percée de trois orifices traversants 107. Plus précisément, selon cet exemple, un orifice traversant 107 est percé au voisinage de chaque extrémité longitudinale des branches du U formant la platine de translation verticale 105, et un orifice traversant 107 est percé en position sensiblement médiane, selon la direction transversale T, de la base du U précité, c'est-à-dire que son axe est, aux tolérances de fabrication près, situé dans le plan longitudinal vertical médian 1035 précédemment défini.

La base du U formant la platine de translation verticale 105 comprend également une ouverture traversante 108 verticale située, selon la direction longitudinale L de l'outil de récolte 100, en avant de l'orifice traversant 107 percé dans ladite base. Comme le montre la FIGURE 3, l'ouverture traversante 108 est sensiblement centrée, selon la direction transversale T précitée, dans la platine de translation verticale 105, c'est-à-dire, en d'autres termes, qu'elle est sensiblement symétrique par rapport au plan longitudinal vertical médian 1035 précédemment évoqué.

Comme le montre également la FIGURE 3, chaque plaque 1030, 1031, du bras 103 de l'outil de récolte 102 comporte, s'étendant longitudinalement vers l'avant à partir d'une arête avant 109 de la partie supérieure 103a du bras 103, une oreille 110 sensiblement plane et parallèle à un plan longitudinal vertical (L, V) de l'outil de récolte 102. Selon l'invention, chaque oreille 110 est traversée de part en part, selon la direction transversale T de l'outil de récolte 102, par une came 111 dont la partie extérieure, située à l'extérieur de l'espace transversal défini entre les deux oreilles 110, forme un galet de came 112. Seule une came 111 et un galet de came 112 sont visibles sur la FIGURE 3.

La FIGURE 4 illustre plus spécifiquement la partie inférieure 103b du bras 103 de l'outil de récolte 102. On retrouve sur cette FIGURE la portion inférieure de la partie supérieure 103a du bras 103, ainsi que la partie inférieure 103b de ce dernier.

En référence à la FIGURE 4, la partie inférieure 103b de chaque plaque 1030, 1031, du bras 103, présente la forme sensiblement trapézoïdale d'une spatule dont une arête avant 113 et une arête inférieure 114 sont amincies selon la direction transversale T de l'outil de récolte 100.

De plus, comme le montre la FIGURE 4, les parties inférieures 103b des plaques 1030, 1031, formant le bras 103 sont reliées entre elles par une lame tranchante 115 qui s'étend principalement selon la direction transversale T de l'outil de récolte 102. Plus précisément, la lame tranchante 115 se présente sous la forme d'une plaquette mince placée à l'extrémité longitudinale avant d'une arête supérieure 116 de la partie inférieure 103b de chaque plaque 1030, 1031, du bras 103.

Selon l'exemple plus particulièrement illustré par les FIGURES, une arête avant 117 de la lame tranchante 115 est sensiblement amincie selon la direction verticale V. De plus, selon l'exemple plus particulièrement illustré par les FIGURES, la lame tranchante 115 présente, en coupe dans un plan longitudinal vertical (L, V), un profil sensiblement incurvé en direction de la partie supérieure 103a du bras 103.

Comme le montre également la FIGURE 4, l'outil de récolte 102 comprend une pluralité de lames 118 sensiblement parallèles entre elles et aux parties inférieures 103b des plaques 1030, 1031, du bras 103 et régulièrement réparties entre ces dernières selon la direction transversale T précitée. Plus précisément, chaque lame 118, sensiblement plane aux tolérances de fabrication près, s'étend dans un plan sensiblement longitudinal vertical de l'outil de récolte 102, et elle est rattachée, à son extrémité longitudinale avant, à la lame tranchante 115 précédemment définie, et, à son extrémité longitudinale arrière, à un barreau 119 de rigidification de l'outil de récolte 102, qui s'étend transversalement entre les extrémités longitudinales arrières des parties inférieures 103b des plaques 1030, 1031, du bras 103, extrémités longitudinales arrières auxquelles le barreau de rigidification 119 est fixé. Plus précisément encore, chaque lame 118 est placée, en référence aux direction et orientations précédemment définies, au-dessous de la lame tranchante 115 selon la direction verticale V de l'outil de récolte 102.

Les parties inférieures 103b des plaques 1030, 1031, du bras 103, la lame tranchante 115, les lames 118 et le barreau de rigidification 119 forment ensemble une griffe de récolte 1020 de l'outil de récolte 102. Comme le montre la FIGURE 4, la griffe de récolte 1020 forme sensiblement une grille.

Il est à noter que le barreau de rigidification 119 rend également les plaques 1030, 1031, du bras 103 solidaires l'une de l'autre dans leur rotation autour de l'axe de pivotement 104 précédemment décrit.

Selon un exemple de réalisation, la griffe 1020 est réalisée dans un matériau métallique, par exemple de l'acier, et les différents éléments qui la composent sont fixés entre eux par soudure.

La FIGURE 2 montre l'outil de récolte 102 tel qu'il vient d'être décrit et, notamment, la griffe de récolte 1020, la platine de translation verticale 105 et ses orifices 107, 108, précédemment décrits. On retrouve également sur la FIGURE 2 le plan longitudinal vertical médian 1035 précédemment évoqué.

En référence à la FIGURE 2, la structure rigide 101 du système de récolte 100 comprend un plateau supérieur 120 et un plateau inférieur 121 sensiblement parallèles entre eux et sensiblement parallèles à un plan longitudinal transversal (L, T) du système de récolte 100. Le plateau inférieur 121 présente sensiblement la forme d'un U dont les branches délimitent entre elles un espace dont une dimension transversale permet le passage de la griffe de récolte 1020 précédemment décrite. Il faut donc comprendre ici que, en référence aux directions et orientations précédemment définies, le plateau inférieur 121 est orienté de telle manière que les branches du U dont il prend la forme sont dirigées vers l'avant du système de récolte 100.

Le plateau supérieur 120 et le plateau inférieur 121 de la structure rigide de support 101 sont reliés entre eux par des piliers 122 et des colonnes 123 sensiblement parallèles entre eux et s'étendant selon la direction verticale V de l'outil de récolte. Piliers 122 et colonnes 123 sont donc perpendiculaires au plateau supérieur 120 et au plateau inférieur 121. Comme le montre la FIGURE 2, les piliers 122 et les colonnes 123 délimitent ensemble un volume 150 dans lequel est reçu l'outil de récolte 102 précédemment décrit. Plus précisément, l'invention prévoit que l'outil de récolte 102 est reçu, au sein du volume 150 précité, en position sensiblement médiane, selon la direction transversale T, entre les piliers 122 précités. De même, l'invention prévoit que la platine de translation verticale 105 est reçu dans le volume 150 précité de telle manière que le plan longitudinal vertical médian 1035 précédemment défini, est également plan longitudinal vertical médian du volume 150.

Selon l'exemple de réalisation plus particulièrement illustré par les FIGURES, les piliers 122 présentent chacun une forme sensiblement parallélépipédique, et ils s'étendent entre, d'une part, les extrémités des deux branches du U dont le plateau inférieur 121 a la forme et, d'autre part, en référence aux directions et orientations précédemment définies, respectivement un coin avant droit et un coin avant gauche du plateau supérieur 120. Par ailleurs, selon cet exemple, la structure rigide 101 comprend trois colonnes 123 sensiblement cylindriques réparties entre le plateau supérieur 120 et le plateau inférieur 121 pour former un trépied. Plus précisément, l'une des colonnes 123 s'étend à partir de la base du U formé par le plateau inférieur 121, les deux autres colonnes 123 s'étendant à partir des branches du U précité, de telle manière que les colonnes 123 forment, en leur partie par laquelle elles sont rattachées au plateau inférieur 121, un triangle sensiblement isocèle. Plus précisément encore, chaque colonne 123 s'étend en traversant un orifice traversant 107, précédemment défini, agencé dans la platine de translation verticale 105 précédemment décrit.

Comme le montre la FIGURE 2, chaque pilier 122 comprend, en sa face intérieure 1220, c'est-à-dire sa face dirigée, selon la direction transversale T du système de récolte 100, vers le deuxième pilier 122, une gorge de guidage d'inclinaison 124 de forme complexe.

Plus précisément, chaque gorge de guidage d'inclinaison 124 s'étend à partir de la face intérieure 1220 sur une partie de la dimension, selon la direction transversale T précitée, du pilier 122 correspondant. Selon la direction verticale V du système de récolte 100, une dimension de chaque gorge de guidage d'inclinaison 124 est inférieure à une dimension verticale du pilier 122. Par ailleurs, selon la direction longitudinale L du système de récolte 100, une dimension de chaque gorge de guidage d'inclinaison 124, mesurée à une extrémité supérieure de celle-ci, est inférieure à une dimension longitudinale de ladite gorge de guidage d'inclinaison 124 mesurée à une extrémité inférieure de cette dernière. Plus précisément, l'invention prévoit qu'une dimension longitudinale de chaque gorge de guidage d'inclinaison 124, mesurée à l'extrémité supérieure de celle-ci, est sensiblement égale ou légèrement supérieure à un diamètre d'un galet de came 112, précédemment défini, de l'outil de récolte 102.

Comme le montre également la FIGURE 2, le système de récolte 100 comprend une vis sans fin 125 qui s'étend verticalement entre le plateau supérieur 120 et le plateau inférieur 121 précédemment définis, en traversant l'ouverture 108 précédemment décrite, agencée dans la platine de translation verticale 105 précédemment défini.

Plus précisément, l'invention prévoit que la vis sans fin 125 et l'ouverture 108 de la platine de translation verticale 105 sont configurés de telle manière qu'une rotation de la vis sans fin 125 entraîne une translation verticale de la platine de translation verticale 105 et des éléments qui lui sont liés. A cette fin, l'invention prévoit que le système de récolte 100 comprend notamment un moteur électrique 126 configuré pour entraîner la vis sans fin 125 en rotation autour de son axe. Le système de récolte 100 comprend également avantageusement un ensemble de capteurs et d'interrupteurs de fin de course non détaillés sur la FIGURE 2, configurés pour contrôler le déplacement vertical en translation de la platine de translation verticale 105 et des éléments qui lui sont liés sous l'effet de la rotation de la vis sans fin 125.

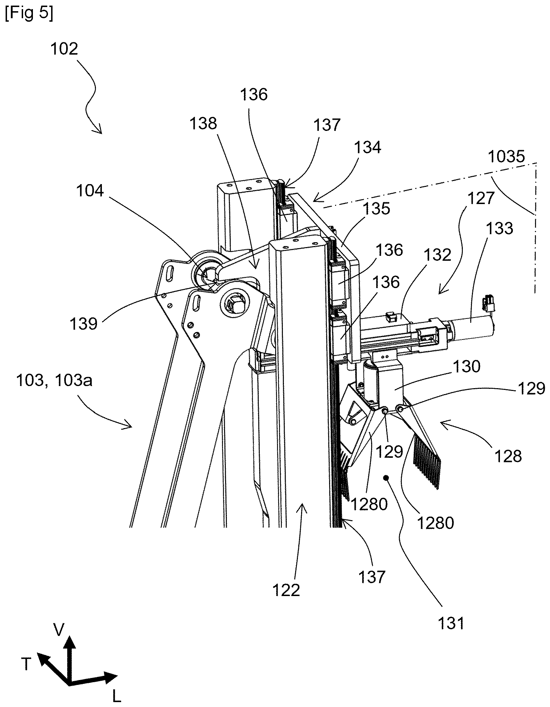

Selon l'invention, le système de récolte 100 comprend également un préhenseur 127, plus précisément illustré en perspective par la FIGURE 5, sur laquelle on retrouve également la partie supérieure 103a du bras 103 de l'outil de récolte 102, l'axe de pivotement 104 de ce dernier et les piliers 122 de la structure rigide 101 du système de récolte 100.

En référence à la FIGURE 5, le préhenseur 127 comprend une pince 128 formée de deux peignes 1280 dont chacun est monté mobile en rotation autour d'un axe de mâchoire transversal 129, lui-même relié à un support de pince 130 du préhenseur 127. Chaque peigne 1280 de la pince 128 s'étend principalement transversalement et verticalement en référence aux directions et orientations précédemment définies, et les formes et dimensions des peignes 1280 sont avantageusement définies pour que, sous l'effet de leurs rotations respectives autour de leurs axes de mâchoire 129, les peignes 1280 se rapprochent l'un de l'autre de telle manière qu'ils définissent entre eux un volume de capture 131. Selon l'exemple plus particulièrement illustré par la FIGURE 5, les peignes 1280 sont identiques et disposés symétriquement par rapport au support de pince 130.

Le support de pince 130 est, selon l'invention, rattaché à un chariot de transfert 132 mobile en translation selon la direction longitudinale L du système de récolte 100. Afin de réaliser cette translation longitudinale, l'invention prévoit que le système de récolte 100 comprend un moteur de translation 133 ainsi qu'un ensemble de capteurs, butées et interrupteurs de fin de course non repérés sur la FIGURE 5, configurés pour contrôler la translation longitudinale du chariot de transfert 132.

Selon l'invention, le chariot de transfert 132 est placé dans le système de récolte 100 de telle manière que lorsque ledit chariot de transfert 132 est, en référence aux directions et orientations précédemment définies, à sa butée de fin de course longitudinale arrière, le support de pince 130 est sensiblement placé en position médiane, selon la direction longitudinale L, dans l'espace transversal délimité entre les piliers 122 précédemment définis. De plus l'invention prévoit que, dans sa butée de fin de course arrière, le chariot de transfert 132 est placé, selon la direction transversale T du système de récolte 100, en position sensiblement médiane entre les piliers 122 précités. Il faut donc comprendre ici que dans sa translation longitudinale, le chariot de transfert 132 est situé à l'extérieur du volume 150 précédemment défini. **Il** faut également comprendre ici que le chariot de transfert 132 et la pince 128 précédemment évoquée sont placés en position transversale sensiblement médiane dans le système de récolte 100.

Selon l'invention, le préhenseur 127 comprend également un chariot de préhenseur 134 configuré pour entraîner la pince 128 et le chariot de transfert 132 dans un mouvement de translation selon la direction verticale V du système de récolte 100. Le chariot de préhenseur 134 est constitué d'un support 135 équipé de patins 136 configurés pour guider le chariot de préhenseur 134 le long de rails verticaux 137 disposés en face avant des piliers 122. Le chariot de préhenseur 134 comprend également une équerre de positionnement 138 configurée pour assurer la liaison dudit chariot de préhenseur 134 avec l'outil de récolte 102 précédemment décrit.

L'équerre de positionnement 138 est formée d'une plaque plane sensiblement disposée, aux tolérances de fabrication et de montage près, dans le plan longitudinal vertical médian 1035 précédemment décrit, fixée sur une face arrière, en référence aux directions et orientations précédemment définies, du support 135. Plus précisément, l'équerre de positionnement 138 forme sensiblement un crochet dirigé longitudinalement vers l'arrière du système de récolte 100 et dont la dimension longitudinale est configurée pour que ledit crochet puisse se placer en appui sur l'axe de pivotement 104 de l'outil de récolte 102. **Il** faut donc comprendre ici que, en référence aux directions et orientations précédemment définies, le crochet formé par l'équerre de positionnement 138 est configuré pour se placer au-dessus, selon la direction verticale V précédemment définie, de l'axe de pivotement 104 précité.

L'invention prévoit qu'un aimant permanent 139 est placé entre l'extrémité longitudinale arrière du crochet précité et l'axe de pivotement 104 afin de réaliser un couplage magnétique entre le chariot de préhenseur 134 et l'outil de récolte 102, de telle manière qu'un mouvement de translation verticale de l'outil de récolte 102 entraîne un mouvement de translation verticale identique du chariot de préhenseur 134, du chariot de transfert 132 et de la pince 128 précédemment décrits.

Comme le montre la FIGURE 2, le système de récolte 100 comporte également un sabot de nettoyage 140. Comme le montre la FIGURE 2, le sabot de nettoyage 140 est reçu dans le volume 150 précité. Selon un exemple de réalisation particulièrement avantageux, mais non exclusif, le sabot de nettoyage 140 est constitué d'un ensemble de tôles métalliques minces pliées et raccordées entre elles, par exemple par soudage.

En référence à la FIGURE 2, le sabot de nettoyage 140 comprend un support 141 rattaché, par exemple par une pluralité de vis, au plateau inférieur 121 de la structure rigide 101 du système de récolte 100. Selon l'invention, le support 141 du sabot de nettoyage 140 est percé d'un orifice 142 configuré pour être traversé par la vis sans fin 125 précédemment décrite.

Le sabot de nettoyage 140 comporte par ailleurs une partie racleuse 143 dont la forme est sensiblement celle d'une pyramide inversée creuse. Plus précisément, la partie racleuse 143 du sabot de nettoyage 140 est rattachée au support 141 précité par le sommet de la pyramide inversée qu'elle forme, de telle manière que les parois de ladite pyramide creuse forment un réceptacle 144 dont l'ouverture est orientée vers la partie supérieure du système de récolte 100 selon la direction verticale V de ce dernier. Plus précisément encore, la partie racleuse 143 du sabot de nettoyage 140 est agencée de telle manière qu'une arête de la pyramide qu'elle forme se situe dans le plan longitudinal vertical médian 1035 précédemment évoqué, dirigée, en référence aux direction et orientations précédemment définies, vers l'avant du système de récolte 100. L'invention prévoit de plus que, selon la direction verticale V du système de récolte 100, la partie racleuse 143 du sabot de nettoyage 140 se trouve au-dessus de la partie inférieure de l'outil de récolte 102 et, plus précisément, au-dessus de la griffe 1020 de l'outil de récolte 102.

L'invention prévoit, de plus, que la partie racleuse 143 du sabot de nettoyage 140 s'étend, selon la direction longitudinale L du système de récolte 100, selon une dimension légèrement inférieure à une dimension longitudinale de la partie inférieure 103b du bras 103 de l'outil de récolte 102.

Selon l'exemple de réalisation plus précisément décrit et illustré ici, le système de récolte 100 comprend également une pluralité de patins 145 s'étendant transversalement sur une face supérieure 1200 du plateau supérieur 120 précédemment décrit. Selon l'exemple plus particulièrement illustré par la FIGURE 2, le système de récolte 100 comprend quatre patins transversaux 145 sensiblement symétriquement disposés, en référence aux directions et orientations précédemment définies, à l'avant, à l'arrière, à droite et à gauche du plateau supérieur 120 précité.

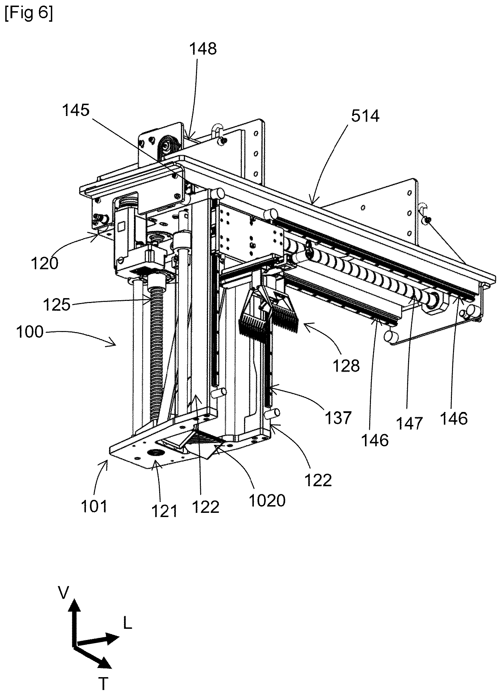

La FIGURE 6 illustre plus particulièrement la partie supérieure du système de récolte 100 selon l'invention, notamment dans sa liaison avec le châssis 501 d'une machine agricole 500 telle que celle illustrée par la FIGURE 1.

On retrouve sur la FIGURE 6 la structure rigide 101 du système de récolte 100 et ses piliers 122, ainsi que la griffe 1020 de l'outil de récolte 102, la vis sans fin 125, le préhenseur 127, la pince 128 et le support 135 du chariot de préhenseur 134. La FIGURE 6 montre également un patins transversal 145 tel que précédemment décrit, placé sur une face supérieure 1200, non visible sur la FIGURE 6, du plateau supérieur 120 de la structure rigide 101.

En référence à la FIGURE 6, les patins transversaux 145 du système de récolte 100, précédemment décrits, sont engagés dans deux rails transversaux 146 portés par une poutre transversale 514 de la machine agricole 500. Plus précisément, les deux rails transversaux 146, parallèles entre eux, sont agencés, selon la direction verticale V du système de récolte 100 et de la machine agricole 500, sous la poutre transversale 514 précitée.

Comme le montre la FIGURE 6, le système de récolte 100 comprend une vis sans fin 147 d'extension transversale, agencée, selon la direction verticale V précitée, sous la poutre 514 précitée et, selon la direction longitudinale L du système de récolte 100 et de la machine agricole 500, entre les rails transversaux 146 précédemment décrits, sensiblement en position longitudinale médiane entre ces derniers.

Le système de récolte 100 comprend enfin un moteur 148 configuré pour entraîner la vis sans fin 147 en rotation autour de son axe, entraînant ainsi les patins transversaux 145 en translation transversale le long des rails transversaux 146 et, donc, la structure rigide 101 à laquelle lesdits patins transversaux sont fixés.

Complémentairement, l'invention prévoit que le système de récolte 100 comprend un capteur 149, non visible sur la FIGURE 6, configuré pour déterminer une position transversale de la structure rigide 101 et, donc, de l'outil de coupe 102, le long des rails transversaux 146. Selon l'invention, l'unité de commande 550 de la machine agricole comprend un module configuré pour enregistrer une telle position transversale déterminée par le capteur 149.

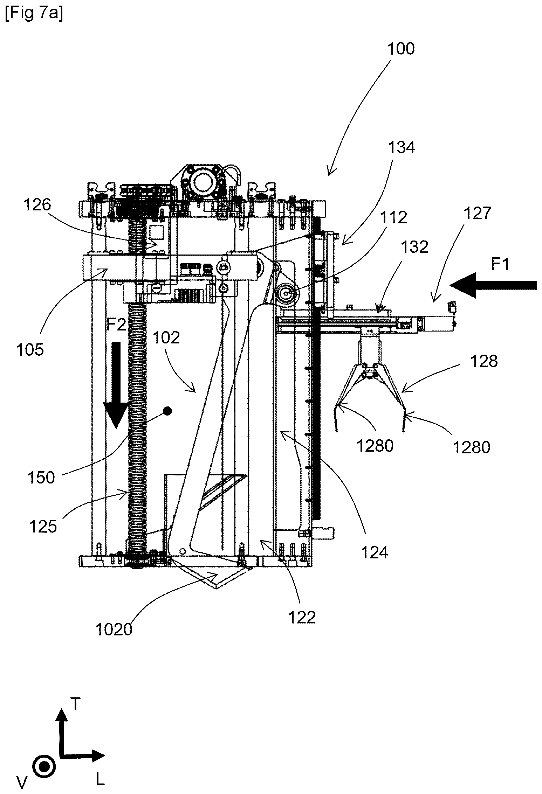

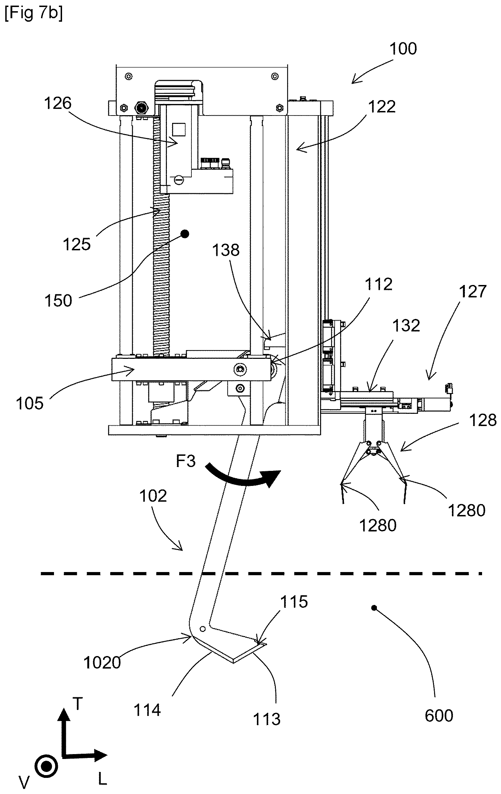

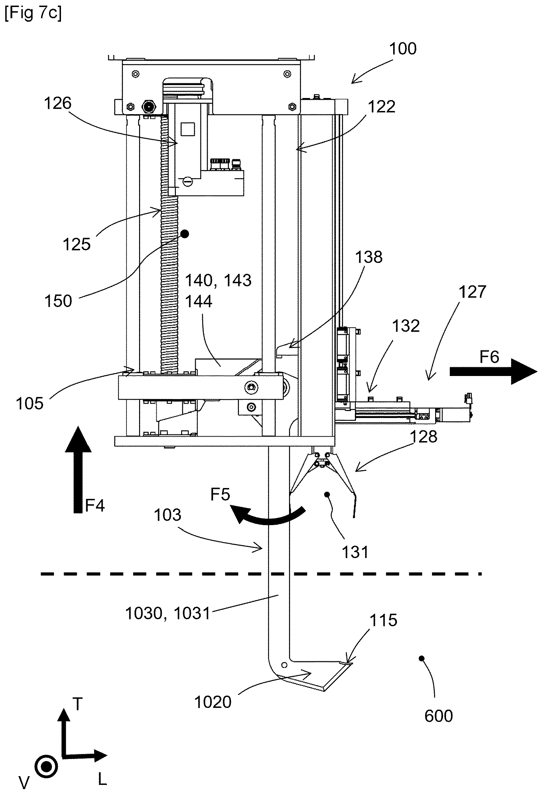

Le fonctionnement de l'outil de récolte 100 est schématiquement illustré par les FIGURES 7a, 7b et 7c, la FIGURE 7a montrant plus précisément le système de récolte 100 dans sa position de repos entre la récolte de deux légumes, par exemple des asperges, et la FIGURE 7c montrant plus précisément l'outil de récolte 100 dans sa position de récolte. Les FIGURES 7a, 7b, et 7c sont des vues schématiques de côté, selon une direction de vue transversale, du système de récolte. Pour plus de clarté, un pilier 122 de la structure rigide 101 n'est pas visible sur la FIGURE 7a. Une butte de culture 600 est schématiquement représentée sur les FIGURES 7b et 7c, en coupe selon un plan longitudinal vertical (T, V) du trièdre (L, T, V) précédemment défini.

Dans la position de repos illustrée par la FIGURE 7a, la platine de translation verticale 105, à laquelle est liée l'outil de récolte 102, est dans une position de butée haute selon la direction verticale V. L'invention prévoit que dans cette position de butée haute de la platine de translation verticale 105, les galets de came 112 précédemment décrits sont engagés à une extrémité supérieure de chaque gorge de guidage d'inclinaison 124, précédemment décrite, agencée dans les piliers 122 précédemment définis. L'invention prévoit également que, dans la position de repos du système de récolte 100, le chariot de transfert 132 est dans une position de butée avant dans laquelle les peignes 1280 de la pince 128 du préhenseur 127 sont éloignés l'un de l'autre et dans laquelle la pince 128 est placée en dehors, en avant, du volume 150 précédemment défini.

Le fonctionnement du système de récolte 100 est le suivant.

Dans une première étape, le chariot de transfert 132 est commandé par l'unité de commande 550 de la machine agricole 500 à se déplacer longitudinalement jusqu'à sa butée longitudinale arrière, dans laquelle, comme précédemment indiqué, les peignes 1280 de la pince 128 du préhenseur 127 se trouvent en position transversale et longitudinale sensiblement médiane entre les piliers 122. Ce déplacement est illustré par la flèche F1 sur la FIGURE 7a.

Concomitamment, l'invention prévoit que la vis sans fin 125, précédemment définie, est entraînée en rotation par le moteur 126 commandé par l'unité de commande 550 de la machine agricole 500, entraînant à son tour la platine de translation verticale 105 précédemment décrite en translation verticale vers le plateau inférieur 121 du système de récolte 100. Le mouvement de translation verticale de la platine de translation verticale 105 est illustré par la flèche F2 sur la FIGURE 7a.

Dans ce mouvement de translation verticale, l'outil de récolte 102 est entraîné en translation verticale vers le bas de l'outil de récolte 102, en référence aux directions et orientations précédemment définies. Dans ce mouvement de translation verticale vers le bas, les galets de came 112 de l'outil de récolte 102 coulissent le long de chaque gorge de guidage d'inclinaison 124 précédemment décrite, agencée dans les piliers 122 du système de récolte 100. Dans ce mouvement de translation verticale vers le bas, le chariot de préhenseur 134 est également entraîné, via le couplage magnétique précédemment décrit, en translation verticale vers le bas, en même temps que la griffe 1020 de l'outil de récolte 102.

La translation verticale du chariot de préhenseur 134 se poursuit jusqu'à ce que ce dernier atteigne une position de butée inférieure dans laquelle ladite translation s'arrête, la translation verticale de la platine de translation verticale 105 et de l'outil de récolte 102 se poursuivant et conduisant au découplage magnétique dudit outil de récolte 102 et du chariot de préhenseur 134. Les positions respectives du chariot de préhenseur 134, de la platine de translation verticale 105 et de l'outil de récolte 102 lors du découplage magnétique précité sont illustrées par la FIGURE 7b. On remarque que, dans cette position, la griffe 1020 de l'outil de récolte 102 est insérée dans la profondeur de la butte de culture 600. Il est à noter que cette insertion est rendue plus facile par la présence, d'une part, des lames 118, précédemment définies, de la griffe 1020, et de la forme amincie respectivement, de l'arête avant 113 et de l'arête inférieure 114 des parties inférieures 103b du bras 103 de l'outil de récolte 102, ces différents éléments réalisant une forme de tranchage de la terre de la butte de culture 600 et facilitant l'insertion de la griffe 1020 dans la profondeur de cette dernière.

Dans une étape suivante de la translation verticale de la platine de translation verticale 105 et de l'outil de récolte 102 vers le bas, illustrée par la FIGURE 7b, les galets de came 112 atteignent chacun l'extrémité inférieure d'une gorge de guidage d'inclinaison 124 précédemment décrite, non visible sur la FIGURE 7b. Le mouvement de translation verticale vers le bas de la griffe 1020 est alors stoppé, tandis que le mouvement de translation verticale vers le bas de la platine de translation verticale 105 se poursuit. Il résulte alors de la configuration particulière de l'extrémité inférieure de chaque gorge de guidage d'inclinaison 124 et, notamment, des dimensions longitudinales de celles-ci, un mouvement de glissement des galets de came 112 vers l'avant du système de récolte 100, conduisant à un mouvement de bascule en rotation du bras 103 et de la griffe 1020 autour de l'axe de pivotement 104. Ce mouvement de bascule est illustré par la flèche F3 sur la FIGURE 7b.

Le mouvement de bascule précité se poursuit jusqu'à ce que les galets de came 112 précédemment évoqués se trouvent en position de butée arrière dans les gorges de guidage d'inclinaison 124, c'est-à-dire jusqu'à ce qu'ils se trouvent en butée, selon la direction longitudinale L, contre le bord vertical arrière desdites gorges 124. Dans cette position, l'invention prévoit que le bras 103 de l'outil de récolte 102 se trouve dans une position sensiblement verticale, comme le montre la FIGURE 7c.

Dans le mouvement de bascule précédemment évoqué, la lame tranchante 115 de la griffe 1020 est déplacée vers l'avant du système de récolte 100 et peut alors trancher, dans un mouvement de cisaillement, un légume tel que, par exemple, une asperge enterrée dans la butte de culture 600. Selon un exemple, la profondeur de pénétration de la griffe 1020 dans la profondeur d'une butte de culture 600 varie de quelques centimètres à quelques dizaines de centimètres selon la nature du légume à récolter : à titre indicatif, cette profondeur est sensiblement comprise entre 10 et 50 centimètres pour la récolte d'asperges, typiquement de l'ordre de 20 à 30 centimètres selon la variété d'asperges considérée. Une fois ce cisaillement effectué, le légume récolté se trouve posé sur la grille, précédemment décrite, formée par la griffe de récolte 1020.

Lorsque le mouvement de bascule de l'outil de récolte 102, illustré par la flèche F3 sur la FIGURE 7b, est terminé, c'est-à-dire, comme indiqué précédemment, lorsque les galets de came 112 se trouvent en butée selon la direction longitudinale L, contre le bord vertical arrière des gorges de guidage d'inclinaison 124, l'invention prévoit que la vis sans fin 125 est commandée en rotation par l'unité de commande 550 de la machine agricole 500, en sens inverse du sens ayant conduit à la translation verticale vers le bas de la platine de translation verticale 105 et la griffe 1020. **Il** s'ensuit un mouvement de translation verticale de la platine de translation verticale 105 et de la griffe 1020 précités, vers le haut du système de récolte 100. Ce mouvement de translation verticale vers le haut est illustré par la flèche F4 sur la FIGURE 7c. Dans ce mouvement de translation verticale vers le haut, la griffe 1020, sur laquelle est posé le légume récolté, est extraite de la butte de récolte 600.

Ce mouvement de translation verticale vers le haut se poursuivant, l'axe de pivotement 104 de l'outil de récolte 102, non visible sur la FIGURE 7c, vient se placer au contact du crochet de l'équerre de positionnement 138, précédemment définie, du chariot de préhenseur 134 : il s'ensuit un rétablissement du couplage magnétique entre l'outil de récolte 102 et le chariot de préhenseur 134, non visible sur la FIGURE 7c. Selon l'invention, les dimensions verticales respectivement de la griffe 1020, de la pince 128 du préhenseur 127, et du chariot de transfert 132, sont définies de telle manière que, lorsque le couplage magnétique est rétabli entre l'outil de récolte 102 et le crochet de l'équerre de positionnement 138, un légume posé sur la griffe 1020 se trouve placé au sein du volume de capture 131, précédemment défini, délimité entre les peignes 1280 de la pince 128 du préhenseur 127. Concomitamment au rétablissement du couplage magnétique entre l'outil de récolte 102 et le chariot de préhenseur 134, l'invention prévoit que la pince 128 du préhenseur 127 est commandée à se refermer pour emprisonner le légume présent au sein du volume de capture131 précité. Selon un exemple, la commande de l'ouverture et de la fermeture de la pince 128 est réalisée au moyen d'un électro-aimant commandé par l'unité de commande 550 de la machine agricole 500.

Selon l'invention, le mouvement de translation verticale vers le haut de la platine de translation verticale 105 et de la griffe 1020 se poursuit, conduisant, d'une part par le couplage magnétique précédemment évoqué, et, d'autre part, par la position du crochet de l'équerre de positionnement 138, à un mouvement de translation verticale vers le haut du chariot de préhenseur 134. Dans ce mouvement de translation verticale vers le haut, il résulte de la configuration particulière des gorges de guidage d'inclinaison 124 agencées dans les piliers 122 que les galets de came 112, lorsqu'ils abordent la partie supérieure desdites gorges, sont ramenés, selon la direction longitudinale L du système de récolte 100, vers le bord arrière, précédemment évoqué, desdites gorges de guidage d'inclinaison 124, induisant un mouvement de pivotement du bras 103 et de la griffe 1020 autour de l'axe de pivotement 104 dans le sens illustré par la flèche F5 sur la FIGURE 7c, et conduisant ainsi le bras 103 et la griffe 1020 à retrouver leur position initiale de repos illustrée par la FIGURE 7a.

L'invention prévoit en outre que les dimensions verticales, d'une part, des différentes parties des gorges de guidage d'inclinaison 124 précédemment évoquées, et, d'autre part, des différentes parties du sabot de nettoyage 140, sont définies de telle manière que lorsque, dans son mouvement de translation verticale vers le haut, la griffe 1020 de l'outil de récolte 102 bascule pour revenir à sa position de repos, avant récolte, l'arête de la partie racleuse 143 du sabot de nettoyage 140 située dans le plan longitudinal vertical médian 1035 précédemment défini s'engage dans l'espace transversal délimité entre les deux plaques 1030, 1031 du bras 103 de l'outil de récolte 102. Le mouvement de l'outil de récolte 102 en translation verticale vers le haut se poursuivant, il s'ensuit un raclage des plaques 1030, 1031, du bras 103 conduisant à l'élimination d'une partie au moins de la terre de la butte de culture 600 piégée entre ces dernières lors de l'insertion, puis de l'extraction, de celles-ci et de la griffe 1020 de ladite butte de culture 600. Il est à noter qu'il résulte de la configuration du sabot de nettoyage 140 que cette terre est recueillie dans le réceptacle 144 que forme la partie racleuse 143 de celui-ci.

Lorsque la platine de translation verticale 105 est revenue à sa position de repos illustrée par la FIGURE 7a, l'invention prévoit que le moteur 133 du chariot de transfert 132 est commandé par l'unité de commande 550 de la machine agricole 500 à déplacer le chariot de transfert 132 selon un mouvement de translation longitudinale dirigé vers l'avant du système de récolte 100, c'est-à-dire en dehors du volume 150 précédemment défini, jusqu'à une position de butée dans laquelle la pince 128 du préhenseur 127 est commandée à s'ouvrir, libérant alors le légume récolté. Ce mouvement de translation longitudinale du chariot de transfert 132 est illustré par la flèche F6 sur la FIGURE 7c. Selon l'invention, les différentes dimensions du système de récolte 100 dont, notamment, une dimension transversale des rails transversaux 146 précédemment définis, et une course longitudinale du chariot de transfert 132 précité, sont définies de telle manière que lorsque la pince 128 du préhenseur 127 est commandée à s'ouvrir pour libérer le légume récolté, ce dernier est libéré au-dessus de l'un des tapis de convoyage 512 de la machine agricole 500, précédemment définis.

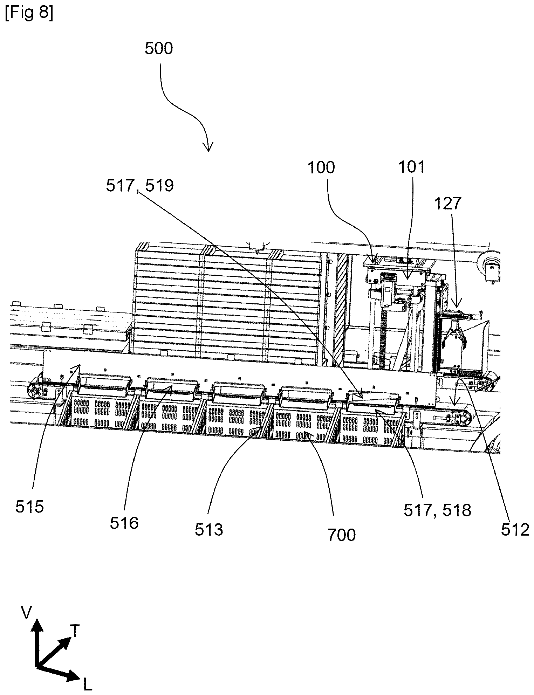

La FIGURE 8 est une vue schématique en perspective de la machine agricole 500, illustrant plus particulièrement les opérations de récupération d'un légume récolté par le système de récolte 100 selon les opérations précédemment décrites.

On retrouve sur la FIGURE 8 le système de récolte 100, sa structure rigide 101 et son préhenseur 127, ainsi qu'un tapis de convoyage, précédemment décrit, 512, et une pluralité de caisses de conservation 700 placées dans les logements de réception 513 précédemment définis. Comme le montre la figue 8, les logements 513 de réception des caisses de conservation 700 s'étendent, selon la direction longitudinale L de la machine agricole 500, sur une longueur légèrement inférieure à celle du tapis de convoyage 512. Plus précisément, selon l'exemple plus particulièrement illustré par la FIGURE 8, les logements de réception 513 sont sensiblement centrés, selon la direction longitudinale L, par rapport au tapis de convoyage 512.

Comme le montre la FIGURE 8, chaque logement de réception 513 s'étend transversalement à partir du tapis de convoyage 512, de telle manière que ce dernier est, selon la direction transversale T de la machine agricole 500, situé entre les logements 513 précités et le système de récolte 100.

Selon l'exemple plus particulièrement illustré par la FIGURE 8, la machine agricole 500 comprend une plaque 515 de séparation entre le tapis de convoyage 512 et les logements de réception 513. La plaque de séparation 515, par exemple réalisée dans une tôle mince, s'étend selon un plan sensiblement longitudinal vertical (L, V), sur une dimension longitudinale supérieure à celle selon laquelle s'étendent les logements de réception 513. Comme le montre la FIGURE 8, la plaque de séparation 515 est percée, en face, selon la direction longitudinale L, de chaque logement de réception 513, d'une ouverture de distribution 516 sensiblement rectangulaire, sensiblement centrée, selon la direction longitudinale L précitée, au regard du logement de réception 513 considéré.

Complémentairement, comme le montre la FIGURE 8, chaque ouverture de distribution 516 ménagée dans la plaque de séparation 515 comporte un goulot de distribution 517 configuré pour guider un légume placé sur le tapis de convoyage 512 vers une caisse de conservation 700 placée dans le logement de réception 513 précité.

Selon l'invention, chaque goulot de distribution 517 comprend, d'une part, une première partie 518, fixe, qui s'étend transversalement en direction d'un logement de réception 513, configurée pour guider un légume acheminé sur le tapis de convoyage 512 vers l'intérieur d'une caisse de conservation 700, et, d'autre part, un volet mobile 519, configuré pour distribuer un légume tel que précité vers l'une ou l'autre des caisses de conservation 700 placées le long du tapis de convoyage 512. Plus précisément, le volet mobile 519 de chaque goulot de distribution 517 est avantageusement mobile en rotation autour d'un axe sensiblement vertical, entre une première position, ouverte, dans laquelle ledit volet mobile 519 s'étend au-dessus du tapis de convoyage 512 en formant une barrière sensiblement transversale sur ce dernier, et une deuxième position, fermée, dans laquelle ledit volet mobile 519 s'étend sensiblement parallèlement à la plaque de séparation 515 précédemment définie en obstruant l'ouverture 516 correspondante.

Selon l'exemple plus particulièrement illustré par la FIGURE 8, non exclusif, la première partie 518 du goulot de distribution 517 présente sensiblement la forme d'un U dont les branches s'étendent selon un plan sensiblement transversal vertical (T, V) de la machine agricole 500 et dont la base s'étend sensiblement parallèlement au tapis de convoyage 512, c'est-à-dire selon un plan sensiblement longitudinal transversal (L, T) de la machine agricole 500. Selon cet exemple, le volet mobile 519 de chaque goulot de distribution 517 présente une forme sensiblement rectangulaire dont une dimension, mesurée selon la direction verticale V de la machine agricole 500, est sensiblement égale ou légèrement inférieure à une dimension verticale des ouvertures 516, celles-ci étant toutes identiques entre elles.

Il résulte de ce qui précède que, lorsque le volet mobile 519 précité est dans sa position ouverte dans laquelle il forme une barrière transversale sur le tapis de convoyage 512, un légume récolté par le système de récolte 100 et acheminé sur ledit tapis de convoyage 51 est dirigé vers la caisse de conservation 700 située au regard du goulot de distribution 517 correspondant et, donc, vers la caisse de conservation 700 correspondante. Lorsque le volet mobile 519 précité est dans sa position fermée précédemment décrite, un légume récolté par le système de récolte 100 et acheminé sur le tapis de convoyage 512 est dirigé sans obstacle jusqu'à la caisse de conservation 700 placée au regard de la première ouverture 516 équipée d'un goulot de distribution 517 dont le volet mobile 519 est dans sa position ouverte précédemment décrite. L'invention permet ainsi de remplir successivement les différentes caisses de conservation 700 placées le long du tapis de convoyage 512.

Avantageusement, la machine agricole 500 est équipée d'un dispositif de contrôle de remplissage des caisses de conservation 700, piloté, par exemple, par l'unité de commande 550 précédemment évoquée, et configuré pour commander l'ouverture et/ou la fermeture des volets mobiles 519 des différents goulots de distribution 517. Selon un exemple, chaque logement de réception 513 comprend un système de pesée de la caisse de conservation 700 placée en son sein, et l'unité de commande 550 de la machine agricole 500 est configurée, d'une part, pour comparer une masse de la caisse de conservation 700 placée dans le logement de réception 513 avec une masse de référence et, d'autre part, pour commander la fermeture du volet mobile 519 correspondant dès lors que la masse de la caisse de conservation 700 considérée est supérieure à la masse de référence précitée.

L'invention prévoit également que l'unité de commande 550 de la machine agricole 500 est configurée pour diriger le préhenseur 127 du système de récolte 100 alternativement vers l'un ou l'autre des tapis de convoyage 512 pour y libérer un légume récolté par ledit système de récolte 100. Plus précisément, l'unité de commande 550 précitée est avantageusement configurée pour commander un déplacement transversal de la structure rigide 101 du système de récolte 100 vers le tapis de convoyage 512 "droit" ou vers le tapis de convoyage 512 "gauche" alternativement, afin d'y libérer un légume récolté. En d'autres termes, l'unité de commande 550 est configurée pour sélectionner alternativement l'un ou l'autre des ensembles de caisses de conservation 700 placé sur le côté droit ou sur le côté gauche de la machine agricole 500 pour y diriger un légume récolté par le système de récolte 100.

Selon un premier exemple de mise en œuvre, cette opération de sélection alternative est réalisée à chaque légume récolté, c'est-à-dire que deux légumes consécutivement récoltés sont, pour l'un, dirigé vers les caisses de conservation 700 situées sur le côté droit de la machine agricole 700 et, pour l'autre, dirigé vers les caisses de conservation situées du côté gauche de la machine agricole 500. Selon un deuxième exemple de mise en œuvre, les légumes récoltés par le système de récolte 100 sont dirigés vers une caisse de conservation 700 située, par exemple, du côté droit de la machine agricole 500 jusqu'à ce que cette caisse soit pleine, après quoi les légumes récoltés sont dirigés vers une caisse de conservation 700 située du côté gauche de la machine agricole 500. En d'autres termes, selon ce deuxième exemple de mise en œuvre, l'alternance des caisses de conservation 700 est réalisée seulement après remplissage de l'une d'elles.

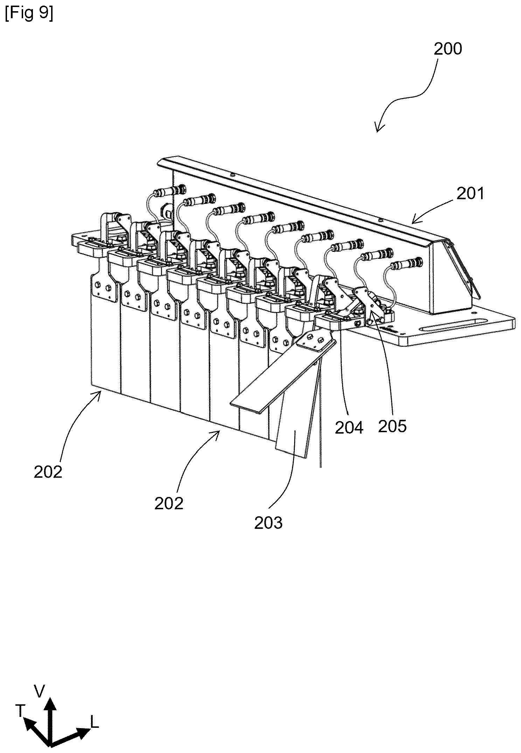

La FIGURE 9 illustre plus particulièrement un outil de détection 200 de la machine agricole 500, configuré pour détecter un légume prêt à récolter dans une butte de culture 600. Un tel outil de détection 200 est également visible sur la FIGURE 1, placé au sein de la machine agricole 500.

En référence à la FIGURE 9, l'outil de détection 200 comprend un support 201 ainsi qu'une pluralité de dispositifs de détection de couple 202 répartis le long du support 201. Selon l'exemple plus particulièrement illustré par la FIGURE 9, les dispositifs de détection de couple 202 sot tous identiques et ils sont régulièrement répartis le long du support 201. Dans ce qui suit, l'outil de détection 200 sera décrit en référence au trièdre (L, T, V) de la machine agricole 500 précédemment défini, c'est-à-dire en référence à sa position, illustrée par la FIGURE 1, au sein de cette dernière.

En référence au trièdre précité, et comme le montre la FIGURE 9, le support 201 de l'outil de détection se présente sous la forme d'une poutre qui s'étend principalement selon la direction transversale T de la machine agricole 500, les dispositifs de détection de couple 202 s'étendant à partir du support 201 sensiblement selon la direction longitudinale L de la machine agricole 500.

Avantageusement, dans la machine agricole 500 telle que précédemment décrite et illustrée par les FIGURES, une dimension transversale du support 201 de l'outil de détection 200 est inférieure ou égale à une distance, mesurée transversalement, entre les poteaux 505 des portiques 504 précédemment définis, et l'outil de détection 200 est placé entre les poteaux 505 précités. Plus précisément, dans la machine agricole 500 telle que précédemment décrite et illustrée, et en référence aux directions, orientations et sens précédemment définis, l'outil de détection est placé entre les poteaux 505 du portique "avant", au voisinage de ces derniers, de telle manière que l'outil de détection 200 se trouve, dans la machine agricole 500, situé "en avant" du système de récolte 100 selon la direction longitudinale L précédemment décrite. Il s'ensuit que, lors d'un déplacement longitudinal de la machine agricole 500 vers l'avant le long d'une butte de culture 600 telle qu'illustrée par la FIGURE 1, l'outil de détection 200 se déplace au-dessus d'une région donnée de ladite butte de culture 600 avant le système de récolte 100.

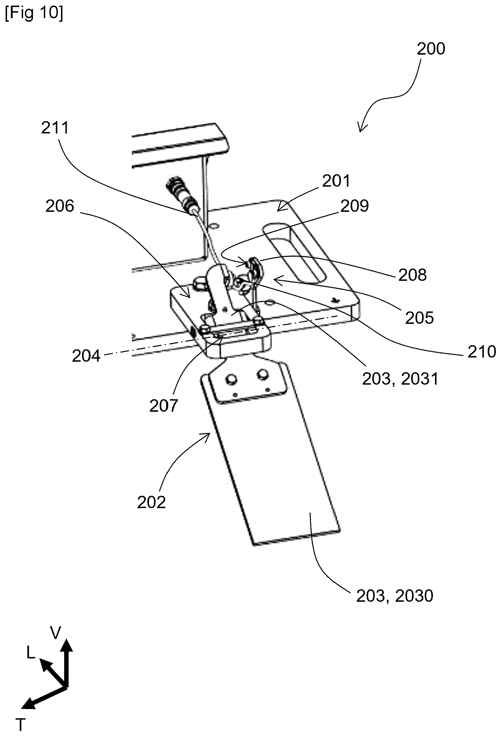

La FIGURE 10 illustre plus précisément un dispositif de détection de couple 202 de l'outil de détection 200. On retrouve sur cette FIGURE une partie du support 201 de l'outil de détection 200.

En référence à la FIGURE 10, le dispositif de détection de couple 202 comprend une plaque pivotante 203, mobile en rotation autour d'un axe 204 sensiblement parallèle à la direction transversale T précitée, et un ensemble de détection 205 configuré pour détecter un couple appliqué à la plaque pivotante 203. Le dispositif de détection de couple 202 comprend également une platine 206 par laquelle le dispositif de détection de couple 202 est fixé sur le support 201.

Plus précisément, la platine 206 précitée est percée, selon sa direction verticale V, d'une ouverture traversante 207 configurée pour recevoir la plaque pivotante 203. L'ouverture traversante 207 est également configurée pour être traversée, selon sa direction transversale T, par l'axe de rotation 204 précédemment défini, autour duquel la plaque pivotante 203 est mobile en rotation.

Plus précisément encore, la plaque pivotante 203 comporte une première partie 2030 qui s'étend d'un côté de la platine 206 selon la direction verticale V de celle-ci, et d'une deuxième partie 2031 qui s'étend du côté opposé de la platine 206 selon la direction verticale précitée, la première partie 2030 et la deuxième partie 2031 de la plaque pivotante 203 s'étendant dans un même plan contenant l'axe de rotation 204 précédemment évoqué. Selon l'exemple plus particulièrement illustré ici, la deuxième partie 2031 de la plaque pivotante 203 est fixée sur la première partie 2030 de cette dernière

En référence à la FIGURE 10 et aux directions et orientations précédemment définies, la deuxième partie 2031 de la plaque pivotante 203 s'étend principalement verticalement au-dessus de la platine 206 en traversant l'ouverture traversante 207 précédemment décrite, et la première partie 2030 de la plaque pivotante 203 s'étend verticalement au-dessous de la platine 206 précitée, dans le prolongement de la portion de la deuxième partie 2031 qui traverse l'ouverture traversante 207 précitée.

Selon l'exemple plus particulièrement illustré par la FIGURE 10, la première partie 2030 de la plaque pivotante 203 présente une forme sensiblement rectangulaire et la deuxième partie 2031 de la plaque pivotante 203 est de forme complexe et s'étend à partir d'un petit côté du rectangle formé par la première partie 2030 de la plaque pivotante 203.

L'ensemble de détection 205 du dispositif de détection de couple 202 comprend, pour sa part, un étrier 208 qui s'étend à partir d'un côté de la platine 206, sensiblement perpendiculairement à cette dernière. Plus précisément, en référence aux directions, sens et orientations précédemment définis, l'étrier 208 s'étend sensiblement verticalement au-dessus de la platine 206, et il comporte, s'étendant à partir de sa face dirigée vers la plaque pivotante 203 et en direction de cette dernière, un capteur de détection de couple 209.

Il résulte de ce qui précède que le capteur de détection de couple 209 est dirigé, selon la direction transversale T de l'outil de détection 200, vers une extrémité libre de la deuxième partie 2031 de la plaque pivotante 203. Selon l'invention, cette extrémité libre de la deuxième partie de la plaque pivotante 203 est équipée d'une cible 210 configurée pour coopérer avec le capteur 209 précité. Selon l'exemple plus particulièrement illustré par la FIGURE 10, la cible 210 est un aimant, et le capteur 209 est un capteur à effet Hall.

Le fonctionnement du dispositif de détection de couple 202 est le suivant :
- dans une position de repos du dispositif de détection de couple 202 dans laquelle aucune détection n'est effectuée, la cible 210 et le capteur 209 sont situés face à face selon la direction principale d'élongation du support 201, c'est-à-dire, ici, selon la direction transversale T de la machine agricole 500. Dans cette position, il résulte de ce qui précède que la première partie 2030 de la lame pivotante 203 s'étend selon un plan sensiblement transversal vertical (T, V) en référence aux directions et orientations précédemment définies.
- lorsque la plaque pivotante 203 est entraînée en rotation autour de son axe de pivot 204, la cible 210 s'éloigne du capteur 209 : le champ magnétique détecté par ce dernier diminue alors sensiblement proportionnellement à l'éloignement de la cible 210 par rapport au capteur 209, c'est-à-dire, en d'autres termes, proportionnellement à l'angle formé par la première partie 2030 de la plaque pivotante avec sa position de repos.

Le dispositif de détection de couple 202 comprend également un ensemble de câbles et connecteurs 211 configurés, d'une part, pour alimenter électriquement l'ensemble de détection 205 et, d'autre part, transmettre, par exemple à l'unité de commande 550 d'une machine agricole 500 telle que précédemment décrite, une ou plusieurs informations relatives à la détection réalisée par le dispositif de détection de couple 202.

Dans une machine agricole 500 telle que précédemment décrite et illustrée, l'outil de détection 200 est placé de telle manière qu'une distance, mesurée verticalement, entre l'extrémité inférieure de la première partie 2030 de la lame pivotante 203 dans sa position de repos, et une butte de culture 600 sur laquelle la machine agricole 500 est placée, est légèrement inférieure à une hauteur d'émergence d'un légume tel que, par exemple, une asperge, de ladite butte de culture 600, correspondant à un degré de maturité du légume autorisant sa récolte.

Il s'ensuit que, lors d'un déplacement longitudinal "avant" de la machine agricole 500 le long de la butte de culture 600, les plaques pivotantes 203 des dispositifs de détection 202 placés au-dessus de légumes dont la hauteur d'émergence de la butte de culture 600 est jugée compatible avec leur récolte sont entraînées en rotation autour de leur axe de pivot 204, déclenchant ainsi, de la part de l'outil de détection 200, une information de détection de la présence d'un légume prêt à récolter par le système de récolte 100.

Avantageusement, l'invention prévoit que l'ensemble de câble et connecteurs 211 de chaque dispositif de détection de couple 202 est configuré pour transmettre à l'unité de commande 550 :
- une information représentative de la position, selon la direction principale d'élongation du support 201 de l'outil de détection 200, c'est-à-dire selon la direction transversale T de la machine agricole 500, d'un légume prêt à récolter tel que précédemment défini. En référence à ce qui précède, cette information de position transversale correspond à une information d'identification du dispositif de détection de couple 202 dont la plaque pivotante 203 a été entraînée en rotation autour de son axe de pivot 204 par le légume prêt à récolter, et elle correspond à une position d'un tel légume prêt à récolter mesurée selon la direction transversale T de la butte de culture, c'est-à-dire selon la largeur de celle-ci.
- et une information de la position, selon la direction longitudinale L, de la machine agricole 500 le long de la butte de culture 600 lorsque le dispositif de détection de couple 202 a détecté la présence d'un légume prêt à récolter tel que précédemment évoqué.

En d'autres termes, l'invention prévoit que l'unité de commande 550 de la machine agricole 500 est configurée pour enregistrer, pour chaque légume prêt à récolter au sens précédemment défini, un couple d'informations représentatives d'une position transversale et d'une position longitudinale de ce légume prêt à récolter sur la butte de culture 600. Autrement dit encore, l'outil de détection 200 permet de réaliser une forme de cartographie de légumes prêts à récolter dans une butte de culture 600.

Afin de disposer d'une cartographie la plus précise possible, l'invention prévoit que les extrémités libres des premières parties 2030 des plaques pivotantes 203 des différents dispositifs de détection de couple 202 forment collectivement un profil de détection complémentaire d'un profil transversal de la butte de culture 600. Selon l'exemple plus particulièrement illustré par les FIGURES 9 et 10, les plaques pivotantes 203 sont toutes identiques, leurs extrémités libres forment donc ensemble un profil sensiblement rectiligne correspondant à une butte de culture 600 dont le sommet, duquel émergent les légumes à récolter, tels que des asperges, est sensiblement plat. Selon d'autres exemples de réalisation, les premières parties 2030 des plaques pivotantes 203 peuvent présenter des formes et dimensions différentes, de telle manière que leurs extrémités libres définissent ensemble, par exemple, un profil concave, circulaire ou elliptique, ou un profil trapézoïdal. Dans ce dernier cas, les plaques pivotantes 203 peuvent être agencées pour détecter des légumes prêts à récolter dans une portion au moins des parois latérales de la butte de culture 600.

L'invention prévoit également que l'unité de commande 550 précitée est configurée pour commander, sur la base du couple d'informations précité, respectivement un déplacement longitudinal de la machine agricole 500 et un déplacement transversal de la structure rigide 101 du système de récolte 100 de manière à amener l'outil de récolte 102 tel que précédemment décrit au-dessus du légume prêt à récolter.

Selon un premier mode de fonctionnement de la machine agricole 500 selon l'invention, la détection et la récolte d'un légume prêt à récolter au sens précédemment défini sont réalisées lors d'un même cycle de déplacement de la machine agricole 500 le long d'une butte de culture 600. Plus précisément, selon ce premier mode de fonctionnement, les légumes prêts à récolter sont récoltés au fur et à mesure de leur détection par l'outil de détection 200 lors du déplacement de la machine agricole 500 le long de la butte de culture 600. Dans ce cas, l'unité de commande 550 précitée est avantageusement configurée pour commander, dès lors qu'un légume prêt à récolter est détecté, un déplacement longitudinal de la machine agricole 500 d'une distance sensiblement égale à la distance séparant, sur cette dernière, l'outil de détection 200 de l'outil de récolte 102, afin d'amener l'outil de récolte 102 au-dessus de la position longitudinale à laquelle le légume prêt à récolter a été détecté.

Selon un autre mode de fonctionnement de la machine agricole 500 selon l'invention, la détection et la récolte d'un légume prêt à récolter au sens précédemment défini sont réalisées lors de cycles différents de déplacement de la machine agricole 500 le long d'une butte de culture 600. Plus précisément, selon ce deuxième mode de fonctionnement, un premier cycle de déplacement de la machine agricole 500 peut être réalisé le long de la butte de culture 600 pour y détecter la totalité des légumes prêts à récolter, et un deuxième cycle de déplacement de la machine agricole 500 peut être réalisé le long de la butte de culture 600 pour procéder à la récolte de ces légumes. Dans ce cas, l'invention prévoit avantageusement que l'unité de commande 550 de la machine agricole 500 est configurée pour stocker l'ensemble des couples d'informations précédemment évoqués, représentatifs des positions longitudinales et transversales des légumes prêts à récolter. Un tel mode de fonctionnement permet, par exemple, de déterminer si une quantité de légumes prêts à récolter est suffisante pour déclencher une opération de récolte sur une butte de culture 600 donnée.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. De même, toutes les variantes et modes de réalisation décrits précédemment sont combinables entre eux. En particulier, les formes des plaques pivotantes 203 des dispositifs de détection de couple 202 de l'outil de détection peuvent être différentes des formes décrites dans le présent document. De même, les formes et dimensions du bras 103 et de la griffe 1020 de l'outil de récolte 100 peuvent différer des formes décrites dans le présent document, dans la mesure où elles présentent les caractéristiques présentées dans le cadre de l'invention. Notamment, ces formes et dimensions peuvent être ajustées pour la récolte de légumes divers cultivés dans des buttes de culture et présentant un mode de récolte analogue à celui des asperges.

## Revendications

1. Système de récolte (100) d'un légume cultivé dans une butte de culture (600), le système de récolte (100) comprenant :
- une structure rigide (101),
- un outil de récolte (102) comportant une griffe (1020) destinée à être enfoncée dans la butte de culture (600), la griffe (1020) étant disposée au niveau d'une extrémité libre d'un bras (103) de l'outil de récolte (102), la griffe (1020) comportant une lame tranchante (115) située au niveau d'une face avant (113) de ladite griffe (1020),
- un étage (105, 125, 126) de translation verticale solidaire de la structure rigide (101) et configuré pour déplacer verticalement l'outil de récolte (102) par rapport à la structure rigide (101), l'outil de récolte (102) étant lié à l'étage de translation verticale (105) au niveau d'une extrémité supérieure du bras (103) de l'outil de récolte (102) opposée à son extrémité libre, l'étage de translation verticale (105, 125, 126) comportant un actionneur (126) configuré pour piloter un déplacement vertical de l'outil de récolte (102), l'étage de translation verticale (105, 125, 126) comportant une vis sans fin (125) liée par une liaison glissière à une platine de translation verticale (105) supportant l'outil de récolte (102), l'actionneur (126) étant configuré pour piloter une rotation de la vis sans fin (125) afin de contrôler un déplacement vertical de la platine de translation verticale (105) le long de ladite vis sans fin (125) ;
- un organe de pivotement (104, 110, 112) de l'outil de récolte (102), l'organe de pivotement (104, 110, 112) étant configuré pour faire pivoter l'outil de récolte (102) relativement à l'étage de translation verticale (105, 125, 126) autour d'un axe de rotation (104) situé au niveau de l'extrémité supérieure du bras (103) de l'outil de récolte (102) ;
**caractérisé en ce que** l'axe de rotation de l'organe de pivotement étant solidaire de la platine de translation.

2. Système de récolte (100) selon l'une quelconque des revendications précédentes, dans lequel l'axe de rotation (104) de l'organe de pivotement (104, 110, 112) s'étend selon une direction transversale (T) du système de récolte (100), perpendiculairement à une direction verticale (V) du système de récolte (100) et de manière à générer un mouvement de pivotement de l'outil de récolte (102) conduisant à un déplacement de la griffe (1020) selon une direction longitudinale (L).

3. Système de récolte (100) selon l'une quelconque des revendications précédentes, dans lequel l'organe de pivotement (104, 110, 112) comporte au moins un organe d'appui (112) situé au niveau de l'extrémité supérieure du bras (103) de l'outil de récolte (102) et configuré pour collaborer avec une gorge de guidage d'inclinaison (124) solidaire de la structure rigide (101).

4. Système de récolte (100) selon l'une quelconque des revendications précédentes, **caractérisé en ce qu'**il comporte un étage (123) de guidage en translation verticale de la platine de translation verticale (105) relativement à la structure rigide (101).

5. Système de récolte (100) selon l'une quelconque des revendications précédentes, **caractérisé en ce qu'**il comporte un outil de préhension (127) solidaire de la platine de translation verticale (105), l'outil de préhension (127) étant configuré pour saisir et relâcher un légume récolté par l'outil de récolte (102).

6. Système de récolte (100) selon l'une quelconque des revendications précédentes, **caractérisé en ce qu'**il comporte un étage de translation transversale (145, 146, 147, 148), l'étage de translation transversale (145, 146, 147, 148) étant configuré pour déplacer la structure rigide (101) selon une direction perpendiculaire à la direction verticale (V).

7. Système de récolte (100) selon la revendication précédente, dans lequel l'étage de translation transversale (145, 146, 147, 148) comporte un capteur (149) configuré pour déterminer une position transversale de la structure rigide (101) le long d'une vis sans fin (147).

8. Machine agricole (500) destinée à permettre la récolte de légumes cultivés dans des buttes de cultures (600) d'un champ, la machine agricole (500) comportant :
- un châssis (501),
- au moins deux roues (502) solidaires d'un arbre mobile en rotation par rapport au châssis (501), les roues (502) étant destinées à être situées de part et d'autre de la butte de culture (600) lorsque la machine agricole (500) est mise en œuvre dans le champ,
- un système de récolte (100) selon l'une quelconque des revendications précédentes, le système de récolte (100) étant solidaire du châssis (501).

9. Machine agricole (500) selon la revendication précédente, comportant :
- un capteur de proximité situé entre chaque roue directionnelle (502) et la butte de culture (600),
- une unité de commande (550) configurée pour piloter les roues motrices (502) de manière à ce qu'une distance transversale entre chaque roue directionnelle (502) et la butte de culture (600) soit constante et/ou invariante et/ou égale de chaque côté de la butte de culture (600).

10. Machine agricole (500) selon la revendication précédente, comportant un système de réglage vertical du châssis (501) relativement aux roues motrices (502), l'unité de commande (550) étant configurée pour piloter le système de réglage vertical du châssis (501) de telle manière qu'une distance verticale entre le châssis (501) et la butte de culture (600) soit constante et/ou invariante.

11. Machine agricole (500) selon la revendication précédente, dans laquelle le système de réglage vertical comporte un réglage d'inclinaison du châssis (501) relativement à un axe transversal (T) de la machine agricole (500) et/ou relativement à un axe longitudinal (L) de ladite machine agricole (500).

12. Machine agricole (500) selon l'une quelconque des revendications 8 à 11, **caractérisé en ce qu'**elle comporte un outil (200) de détection d'au moins un légume cultivé dans une butte de culture (600), l'outil de détection (200) comprenant :
- un support (201) qui s'étend selon une direction principale d'élongation (T), et,
- une pluralité de dispositifs de détection de couple (202) répartis le long de la direction principale d'élongation (T) du support (201), chaque dispositif de détection de couple (202) comportant, d'une part, une plaque pivotante (203) s'étendant perpendiculairement à la direction principale d'élongation (T) du support (201) et étant mobile en rotation autour d'un axe de pivot (204) et relativement au support (201), et, d'autre part, un capteur (209) configuré pour détecter un couple apparaissant sur la plaque pivotante (203).

13. Procédé de récolte de légumes cultivés dans une butte de culture (600) à l'aide d'une machine agricole (500) selon l'une quelconque des revendications 8 à 12, le procédé de récolte comprenant :
- une étape de positionnement de la machine agricole (500) au-dessus de l'un des légumes cultivés, dit légume à récolter, de sorte que le système de récolte (100) de la machine agricole (500) soit situé à proximité directe du légume à récolter,
- une étape d'enfoncement de l'outil de récolte (102) de la machine agricole (500) dans la butte de culture (600),
- une étape de tranchage du légume à récolter dans la butte de culture (600), l'étape de tranchage étant réalisée par l'outil de récolte (102),
- une étape de récolte du légume à récolter, l'étape de récolte comportant une remontée du légume à récolter par l'outil de récolte (102),
- une étape de stockage du légume à récolter dans une pluralité de caisses de conservation (700) embarquées sur la machine agricole (500).

14. Procédé de récolte selon la revendication précédente, comprenant au moins une étape de détection d'au moins un légume cultivé dans la butte de culture (600), dit légume détecté, chaque au moins une étape de détection étant mise en œuvre par un outil de détection (200) de la machine agricole (500) selon la revendication 13 et conduisant à définir une position longitudinale de la machine agricole (500) relativement à la butte de culture (600), dite position longitudinale de récolte, de sorte que l'outil de récolte (102), à l'issue de l'étape de positionnement, soit situé à l'une de l'au moins une position longitudinale de récolte, le légume détecté devenant alors le légume à récolter.

## Patentansprüche

1. Erntesystem (100) für ein Gemüse, das auf einem Hügelbeet (600) angebaut wird, wobei das Erntesystem (100) Folgendes umfasst:
- eine starre Struktur (101),
- ein Erntewerkzeug (102), das eine Klaue (1020) umfasst, die dazu bestimmt ist, in das Hügelbeet (600) getrieben zu werden, wobei die Klaue (1020) auf der Ebene eines freien Endes eines Arms (103) des Erntewerkzeugs (102) angeordnet ist, wobei die Klaue (1020) eine schneidende Klinge (115) umfasst, die sich auf der Ebene einer Vorderseite (113) der Klaue (1020) befindet,
- eine Stufe (105, 125, 126) zur vertikalen Verschiebung, die fest mit der starren Struktur (101) verbunden und dazu konfiguriert ist, das Erntewerkzeug (102) in Bezug auf die starre Struktur (101) vertikal zu verschieben, wobei das Erntewerkzeug (102) an die Stufe (105) zur vertikalen Verschiebung auf der Ebene eines oberen Endes des Arms (103) des Erntewerkzeugs (102), seinem freien Ende entgegengesetzt, verbunden ist, wobei die Stufe (105, 125, 126) zur vertikalen Verschiebung einen Aktuator (126) umfasst, der dazu konfiguriert ist, eine vertikale Verschiebung des Erntewerkzeugs (102) zu steuern, wobei die Stufe (105, 125, 126) zur vertikalen Verschiebung eine Endlosschraube (125) umfasst, die durch eine Gleitschienenverbindung mit einer Platte (105) zur vertikalen Verschiebung verbunden ist, die das Erntewerkzeug (102) trägt, wobei der Aktuator (126) dazu konfiguriert ist, eine Drehung der Endlosschraube (125) zu steuern, um eine vertikale Verschiebung der Platte (105) zur vertikalen Verschiebung entlang der Endlosschraube (125) zu kontrollieren;
- ein Schwenkorgan (104, 110, 112) des Erntewerkzeugs (102), wobei das Schwenkorgan (104, 110, 112) dazu konfiguriert ist, das Erntewerkzeug (102) relativ zu der Stufe (105, 125, 126) zur vertikalen Verschiebung um eine Drehachse (104), die sich im Bereich des oberen Endes des Arms (103) des Erntewerkzeugs (102) befindet, schwenken zu lassen;
**dadurch gekennzeichnet, dass** die Drehachse des Schwenkorgans fest mit der Verschiebungsplatte verbunden ist.

2. Erntesystem (100) nach einem der vorstehenden Ansprüche, wobei sich die Drehachse (104) des Schwenkorgans (104, 110, 112) gemäß einer Querrichtung (T) des Erntesystems (100) senkrecht zu einer vertikalen Richtung (V) des Erntesystems (100) und derart erstreckt, dass eine Schwenkbewegung des Erntewerkzeugs (102) erzeugt wird, die zu einer Verschiebung der Klaue (1020) gemäß einer Längsrichtung (L) führt.

3. Erntesystem (100) nach einem der vorstehenden Ansprüche, wobei das Schwenkorgan (104, 110, 112) mindestens ein Auflageorgan (112) umfasst, das sich auf der Ebene des oberen Endes des Arms (103) des Erntewerkzeugs (102) befindet und dazu konfiguriert ist, mit einer Neigungsführungsnut (124), die fest mit der starren Struktur (101) verbunden ist, zusammenzuwirken.

4. Erntesystem (100) nach einem der vorstehenden Ansprüche, **dadurch gekennzeichnet, dass** es eine Stufe (123) zur Führung in vertikaler Verschiebung der Platte (105) zur vertikalen Verschiebung in Bezug auf die starre Struktur (101) umfasst.

5. Erntesystem (100) nach einem der vorstehenden Ansprüche, **dadurch gekennzeichnet, dass** es ein Greifwerkzeug (127) umfasst, das fest mit der Platte (105) zur vertikalen Verschiebung verbunden ist, wobei das Greifwerkzeug (127) dazu konfiguriert ist, ein geerntetes Gemüse durch das Erntewerkzeug (102) zu erfassen und freizugeben.

6. Erntesystem (100) nach einem der vorstehenden Ansprüche, **dadurch gekennzeichnet, dass** es eine Stufe (145, 146, 147, 148) zur transversalen Verschiebung umfasst, wobei die Stufe (145, 146, 147, 148) zur transversalen Verschiebung dazu konfiguriert ist, die starre Struktur (101) gemäß einer Richtung senkrecht zu der vertikalen Richtung (V) zu verlagern.

7. Erntesystem (100) nach dem vorstehenden Anspruch, wobei die Stufe (145, 146, 147, 148) zur transversalen Verschiebung einen Sensor (149) umfasst, der dazu konfiguriert ist, eine Querposition der starren Struktur (101) entlang der Endlosschraube (147) zu bestimmen.

8. Landwirtschaftliche Maschine (500), die dazu bestimmt ist, die Ernte von Gemüse, das auf Hügelbeeten (600) eines Feldes angebaut wird, zu erlauben, wobei die landwirtschaftliche Maschine (500) Folgendes umfasst:
- ein Chassis (501),
- mindestens zwei Räder (502), die fest mit einer Welle verbunden sind, die in Drehung in Bezug auf das Chassis (501) beweglich sind, wobei die Räder (502) dazu bestimmt sind, sich zu beiden Seiten des Hügelbeetes (600) zu befinden, wenn die landwirtschaftliche Maschine (500) auf dem Feld eingesetzt wird,
- ein Erntesystem (100) nach einem der vorstehenden Ansprüche, wobei das Erntesystem (100) fest mit dem Chassis (501) verbunden ist.

9. Landwirtschaftliche Maschine (500) nach dem vorstehenden Anspruch, die Folgendes umfasst:
- einen Näherungssensor, der sich zwischen jedem Richtungsrad (502) und dem Hügelbeet (600) befindet,
- eine Steuereinheit (550), die dazu konfiguriert ist, die Antriebsräder (502) derart zu steuern, dass ein Querabstand zwischen jedem Richtungsrad (502) und dem Hügelbeet (600) konstant und/oder unveränderlich und/oder auf jeder Seite des Hügelbeets (600) gleich ist.

10. Landwirtschaftliche Maschine (500) nach dem vorstehenden Anspruch, die ein System zur vertikalen Einstellung des Chassis (501) in Bezug auf die Antriebsräder (502) umfasst, wobei die Steuereinheit (550) dazu konfiguriert ist, das System zur vertikalen Einstellung des Chassis (501) derart zu steuern, dass ein vertikaler Abstand zwischen dem Chassis (501) und dem Hügelbeet (600) konstant und/oder unveränderlich ist.

11. Landwirtschaftliche Maschine (500) gemäß dem vorstehenden Anspruch, wobei das System zur vertikalen Einstellung eine Neigungseinstellung des Chassis (501) in Bezug auf eine Querachse (T) der landwirtschaftlichen Maschine (500) und/oder in Bezug auf eine Längsachse (L) der landwirtschaftlichen Maschine (500) umfasst.

12. Landwirtschaftliche Maschine (500) nach einem der Ansprüche 8 bis 11, **dadurch gekennzeichnet, dass** sie ein Werkzeug (200) zur Erfassung mindestens eines Gemüses, das auf einem Hügelbeet (600) angebaut ist, umfasst, wobei das Erfassungswerkzeug (200) Folgendes umfasst:
- einen Träger (201), der sich entlang einer Hauptausdehnungsrichtung (T) erstreckt, und
- eine Vielzahl von Drehmomenterfassungsvorrichtungen (202), die entlang der Hauptausdehnungsrichtung (T) des Trägers (201) verteilt ist, wobei jede Drehmomenterfassungsvorrichtung (202) einerseits eine Schwenkplatte (203), die sich senkrecht zu der Hauptausdehnungsrichtung (T) des Trägers (201) erstreckt und in Drehung um eine Schwenkachse (204) und in Bezug auf den Träger (201) beweglich ist, und andererseits einen Sensor (209) umfasst, der zum Erfassen eines Drehmoments, das auf der Schwenkplatte (203) erscheint, konfiguriert ist.

13. Ernteverfahren von Gemüse, das auf einem Hügelbeet (600) angebaut ist, mit Hilfe einer landwirtschaftlichen Maschine (500) nach einem der Ansprüche 8 bis 12, wobei das Ernteverfahren Folgendes umfasst:
- einen Positionierungsschritt der landwirtschaftlichen Maschine (500) oberhalb eines des angebauten Gemüses, als zu erntendes Gemüse bezeichnet, derart, dass sich das Erntesystem (100) der landwirtschaftlichen Maschine (500) in direkter Nähe des zu erntenden Gemüses befindet,
- einen Eintreibeschritt des Erntewerkzeugs (102) der landwirtschaftlichen Maschine (500) in das Hügelbeet (600),
- einen Schneidschritt des zu erntenden Gemüses auf dem Hügelbeet (600), wobei der Schneidschritt von dem Erntewerkzeug (102) durchgeführt wird,
- einen Ernteschritt des zu erntenden Gemüses, wobei der Ernteschritt ein Hochziehen des zu erntenden Gemüses durch das Erntewerkzeug (102) umfasst,
- einen Lagerschritt des zu erntenden Gemüses in einer Vielzahl von Konservierungskisten (700), die auf der landwirtschaftlichen Maschine (500) mitgeführt wird.

14. Ernteverfahren nach dem vorstehenden Anspruch, das mindestens einen Schritt zur Erfassung mindestens eines Gemüses, das auf dem Hügelbeet (600) angebaut ist, als erfasstes Gemüse bezeichnet, umfasst, wobei jeder mindestens eine Erfassungsschritt von einem Erfassungswerkzeug (200) der landwirtschaftlichen Maschine (500) nach Anspruch 13 umgesetzt wird und zum Definieren einer Längsposition der landwirtschaftlichen Maschine (500) in Bezug auf das Hügelbeet (600) führt, die als Erntelängsposition bezeichnet wird, so dass sich das Erntewerkzeug (102) nach dem Positionierungsschritt an mindestens der mindestens einen Erntelängsposition befindet, wobei das erfasste Gemüse zu dem zu erntenden Gemüse wird.

## Claims

1. A harvesting system (100) of a vegetable grown in a culture mound (600), wherein the harvesting system (100) comprises:
- a rigid structure (101),
- a harvesting tool (102) comprising a claw (1020) designed to be driven into the culture mound (600), the claw (1020) being located at a free end of an arm (103) of the harvesting tool (102), the claw (1020) comprising a sharp blade (115) located at a front side (113) of said claw (1020),
- a stage (105, 125, 126) of vertical translation united with the rigid structure (101) and configured to move vertically the harvesting tool (102) relatively to the rigid structure (101), the harvesting tool (102) being linked to the vertical translation stage (105) at an upper end of the arm (103) of the harvesting tool (102) opposite to its free end, the vertical translation stage (105, 125, 126) comprising an actuator (126) configured to drive a vertical movement of the harvesting tool (102), the vertical translation stage (105, 125, 126) comprising a worn screw (125) connected by a sliding connection with a vertical translation plate (105), which holds up the harvesting tool (102), the actuator (126) being configured to drive a rotation of the worn screw (125) in order to control a vertical movement of the vertical translation plate (105) along said worn screw (125);
- a swiveling item (104, 110, 112) of the harvesting tool (102), wherein the swiveling item (104, 110, 112) is configured to make the harvesting tool (102) swivel relatively to the vertical translation stage (105, 125, 126) around a rotation axis (104) located at the upper end of the arm (103) of the harvesting tool (102);
**characterized in that** the rotation axis of the swiveling item is in connection with the translation plate.

2. A harvesting system (100) according to any one of the previous claims, wherein the rotation axis (104) of the swiveling item (104, 110, 112) extends along a transversal direction (T) of the harvesting system (100) perpendicular to a vertical direction (V) of the harvesting system (100) in order to generate a swiveling movement of the harvesting tool (102) that leads to a movement of the claw (1020) along a longitudinal direction (L).

3. A harvesting system (100) according to any one of the previous claims, wherein the swiveling item (104, 110, 112) comprises at least a support item (112) located at the upper end of the arm (103) of the harvesting tool (102) and configured to cooperate with a tilting guide groove (124) in connection with the rigid structure (101).

4. A harvesting system (100) according to any one of the previous claims, **characterized in that** it comprises a vertical translation guide stage (123) for the vertical translation plate (105) relatively to the rigid structure (101).

5. A harvesting system (100) according to any one of the previous claims, **characterized in that** it comprises a gripping tool (127) in connection with the vertical translation plate (105), wherein the gripping tool (127) is configured to seize and drop a vegetable collected by the harvesting tool (102).

6. A harvesting system (100) according to any one of the previous claims, **characterized in that** it comprises a transversal translation guide stage (145, 146, 147, 148), the transversal translation guide stage (145, 146, 147, 148) being configured to move the rigid structure (101) along a direction perpendicular to the vertical direction (V).

7. A harvesting system (100) according to the previous claim, wherein the transversal translation guide stage (145, 146, 147, 148) comprises a sensor (149) configured to determine a transversal position of the rigid structure (101) along a worn screw (147).

8. An agricultural machine (500) designed for the harvest of vegetables grown in culture mounds (600) in a field, wherein the agricultural machine (500) comprises:
- a frame (501),
- at least two wheels (502) in connection with a movable shaft relatively to the frame (501), the wheels (502) being designed to be located on both sides of the culture mound (600) when the agricultural machine (500) is implemented in the field,
- a harvesting system (100) according to any one of the previous claims, the harvesting system (100) being in connection with the frame (501).

9. An agricultural machine (500) according to the previous claim, comprising:
- a proximity sensor located between each directional wheel (502) and the culture mound (600),
- a control unit (550) configured to control the drive wheels (502) so that a transversal distance between each directional wheel (502) and the culture mound (600) is constant and/or invariable and/or equal on both sides of the culture mound (600).

10. An agricultural machine (500) according to the previous claim, comprising a vertical adjustment system for the frame (501) relatively to the drive wheels (502), wherein the control unit (550) is configured to monitor the vertical adjustment system for the frame (501) so that a vertical distance between the frame (501) and the culture mound (600) is constant and/or invariable.

11. An agricultural machine (500) according to the previous claim, wherein the vertical adjustment system comprises a tilting adjustment system of the frame (501) relatively to a transversal axis (T) of the agricultural machine (500) and/or relatively to a longitudinal axis (L) of said agricultural machine (500).

12. An agricultural machine (500) according to any one of claims 8 to 11, **characterized in that** it comprises a tool (200) to detect at least a vegetable grown in a culture mound (600), wherein the detection tool (200) comprises:
- a support (201) that extends along a main elongation direction (T), and
- a plurality of torque detection devices (202) located along the main elongation direction (T) of the support (201), each torque detection device (202) comprises, on one hand, a swiveling plate (203) that extends perpendicular to the main elongation direction (T) of the support (201) and that is movable around a pivot axis (204) and relatively to the support (201) and, on the other hand, a sensor (209) configured to detect a torque on the swiveling plate (203).

13. A process to harvest vegetables grown in a culture mound (600) thanks to an agricultural machine (500) according to any one of claims 8 to 12, the harvesting process comprising:
- a step of positioning the agricultural machine (500) above one of the grown vegetables, called vegetable to harvest, so that the harvesting system (100) of the agricultural machine (500) is located in immediate proximity of the vegetable to harvest,
- a step of plunging the harvesting tool (102) of the agricultural machine (500) into the culture mound (600),
- a step of cutting the vegetable to harvest in the culture mound (600), the cutting step being implemented by the harvesting tool (102),
- a step of harvesting the vegetable to harvest, the harvesting step comprising an upward movement of the vegetable to harvest by the harvesting tool (102),
- a step of storing the vegetable to harvest in a plurality of conservation boxes (700) aboard the agricultural machine (500).

14. A process to harvest according to the previous claim, comprising at least one step of detection of at least a vegetable grown in the culture mound (600), called detected vegetable, each at least one step of detection being implemented by a detection tool (200) of the agricultural machine (500) according to claim 13 and leads to define a longitudinal position of the agricultural machine (500) relatively to the culture mound (600), called longitudinal harvesting position, so that the harvesting tool (102) at the end of the positioning step, is located at one of the at least one harvesting longitudinal position, the detected vegetable becoming then the vegetable to harvest.
